# EUROPÄISCHE PATENTSCHRIFT

(11) **EP 0 770 564 B1**
(45) Veröffentlichungstag und Bekanntmachung des Hinweises auf die Patenterteilung: **21.11.2001**
(21) Anmeldenummer: 96112839.4
(22) Anmeldetag: 09.08.1996
(51) Int. Cl.: B65G 1/04, B66C 1/66

(54) **Vorrichtung zum Lagern und Transportieren von langen Werkstücken**
Storage and transport device for long workpieces
Dispositif de stockage et de transport de pièces longues

(30) Priorität: 28.10.1995 DE 29517134 U
(43) Veröffentlichungstag der Anmeldung: 02.05.1997
(73) Patentinhaber: KEURO Besitz GmbH & Co. EDV-Dienstleistungs KG, D-77855 Achern-Gamshurst (DE)
(72) Erfinder: Stolzer Armin, 76532 Baden-Baden (DE)
(74) Vertreter: Lemcke, Rupert, Dipl.-Ing.

(56) Entgegenhaltungen:
- DE-A- 3 012 826
- FR-A- 1 356 384
- FR-A- 1 431 799
- FR-A- 2 675 792
- GB-A- 892 665

## Beschreibung

Die Erfindung betrifft eine Vorrichtung zum Lagern und Transportieren von langen Werkstücken nach dem Oberbegriff des Anspruches 1.

Mit Hilfe von im Querschnitt U-förmigen Jochen der genannten Art werden lange Werkstücke wie zum Beispiel Rundstähle, Profilstangen, Rohre, Bleche oder dergleichen gelagert. Je nach Länge der Werkstücke kommen für deren Aufnahme auch mehr als zwei mit gegenseitigem Abstand nebeneinander angeordnete Joche pro Werkstückart bzw. Gebinde in Frage, damit die Werkstücke über ihre Länge eine genügende Unterstützung haben.

Bei einer Vorrichtung nach der DE 27 38 332 B haben die Seitenteile der Joche an ihren oberen Enden zum Anheben mittels einer an einem Kran angeschlagenen Traverse hakenförmige Aufhängeplatten, in deren Haken die Traverse mit seitlich vorstehenden Armen eingehängt wird. Beim Aufeinanderstapeln mehrerer Joche der bekannten Art ragen die hakenförmigen Aufhängeplatten jeweils in einen hohlen Bereich des aufgesetzten Joches, so daß sie beim Aufeinanderstapeln mehrerer Joche nicht stören.

Die bekannte Vorrichtung hat jedoch den Nachteil, daß die Herstellung der Joche durch das Erfordernis komplizierter Brennzuschnitte aufwendig ist. Außerdem ist beim Transport die Aufhängung der Joche an der Traverse um die durch die Tragarme gebildete Achse instabil, so daß die Joche um diese Achse schaukeln können. Darüber hinaus ist die bekannte Vorrichtung nicht für einen automatischen Arbeitsablauf geeignet, denn die seitlich vorstehenden Arme der Traverse müssen jeweils durch manuellen Zugriff und/oder komplizierte, nur von Hand steuerbare Fahrbewegungen der Hubanlage in die Haken der Aufhängeplatten eingefädelt werden. Schließlich ist es mit der bekannten Vorrichtung schwierig und zeitaufwendig, Werkstücke einer bestimmten Art auszulagern, wenn sich diese nicht als oberste auf einem Stapel übereinander gesetzter Werkstückgebinde befindet. Befinden sich nämlich die auszulagernden Werkstücke innerhalb eines Stapels, müssen die darüber befindlichen Werkstückgebinde zunächst einzeln abgehoben und auf einen anderen Stapel oder einen anderen Platz umgesetzt werden, bis die auszulagernden Werkstücke sich als oberstes in ihrem Stapel befinden und mittels der Hubanlage nach außen geführt werden können.

Durch die FR 1 431 799 A ist eine Vorrichtung der eingangs genannten Gattung bekannt, bei der innerhalb der durch je zwei Profilstäbe gebildeten Seitenteile die Mittel angeordnet sind, die von den Lastaufnahmen untergriffen werden können. Dieser bekannten Vorrichtung haften jedoch die vorstehend genannten Nachteile zum großen Teil ebenfalls an. So können zum einen die Joche beim Transport an den Lastaufnahmen eine Schaukelbewegung ausführen, ihre Position ist also instabil, was zu einem Verrutschen der Werkstücke führen kann mit der Folge einer Beeinträchtigung einer eventuellen automatischen Weiterverarbeitung, die auf definierte Werkstückpositionen angewiesen ist. Zum anderen ist hier gleichermaßen die Auslagerung bestimmter Werkstücke dann schwierig, wenn sich diese nicht gerade oberhalb eines Stapels übereinander gesetzter Werkstückgebinde befinden.

Aufgabe der vorliegenden Erfindung ist es daher, eine Vorrichtung der eingangs genannten Art so auszugestalten, daß mit Hilfe einfacher und lagestabil aufnehmbarer Joche deren automatisierte Handhabung durch die Hubanlage möglich ist. Damit soll gleichzeitig auch vorbereitet sein, daß in weiterer Ausbildung des Erfindungsgegenstandes mehrere aufeinander gestapelte Joche in einem Arbeitsgang transportiert werden können.

Diese Aufgabe ist in ihrem ersten, wesentlichen Teil erfindungsgemäß dadurch gelöst, daß die Mittel für den Eingriff der Lastaufnahmen durch wenigstens einen Vorsprung auf der Außenseite jedes Seitenteiles gebildet sind und daß die Hubanlage jedem Seitenteil zugeordnet zwei Lastaufnahmen aufweist.

Diese erfindungsgemäßen Maßnahmen haben die Wirkung, daß nunmehr die vertikalen Lastarme dicht seitlich an den Seitenteilen der Joche neben den Vorsprüngen vorbei nach unten gefahren werden können solage, bis sich die Lastaufnahmen auf einer Höhe unterhalb der Vorsprünge befinden. Nunmehr können die Lastaufnahmen durch geeignete Stellmittel in ihre Position unterhalb der Vorsprünge gebracht werden, so daß daraufhin die Joche durch Anheben der vertikalen Lastarme mit Hilfe der Hubanlage angehoben werden können. Einer umständlichen Manipulation zum Einfädeln der Lastaufnahmen unter die Vorsprünge bedarf es nicht, da die den Vorsprüngen zugeordnete Position der Lastaufnahmen durch die Position der vertikalen Lastarme stets richtig vorgegeben ist. Dadurch, daß jedem Seitenteil zur Handhabung des Joches zwei Lastaufnahmen zugeordnet sind, ergibt sich außerdem eine kippsichere Auflage der Joche an den Lastarmen. Schließlich gestattet es die erfindungsgemäße Ausbildung, die Stapel aufeinander gesetzter Joche und damit die Stapel der Werkstückgebinde dicht nebeneinander anzuordnen, obwohl die Lastarme mit den Lastaufnahmen an den Seitenteilen der Joche auf deren Außenseite vorbeigefahren werden. Dabei können die Lastaufnahmen quer zur Längsrichtung der Werkstücke verstellbar sein. Besonders zweckmäßig ist es jedoch, wenn die Lastaufnahmen parallel zur Längsrichtung der Werkstücke verstellbar sind, denn dann liegen, wie sich dies nachfolgend noch im einzelnen ergibt, die Vorsprünge innerhalb des horizontalen Querschnittsbereiches, den die Seitenteile der Joche ohnehin benötigen.

Im Rahmen der vorstehend geschilderten Erfindung liegt es auch, wenn die Lastaufnahmen beim Herabfahren der Lastarme durch die Vorsprünge beispielsweise gegen Federkraft beiseite gedrückt werden und dann mittels der Federkraft unter die Vorsprünge einklinken. Zum Lösen dieser Verbindung müssen dann die Lastaufnahmen durch die Stellmittel gegen die Federkraft unter den Vorsprüngen fortgezogen werden.

Beim Gegenstand der vorstehend geschilderten Erfindung ist es ausreichend, wenn jedes Seitenteil einen Vorsprung aufweist. Dann muß nur dafür Sorge getragen werden, daß die diesem zugeordneten beiden Lastaufnahmen aufeinander zu bewegbar sind, wenn sie in ihrer Position unterhalb des Vorsprunges verstellt werden sollen. Der Vorsprung hat dann selbstverständlich parallel zur Längsrichtung der Werkstücke eine horizontale Abmessung, die es erlaubt, daß von jeder Seite aus eine Lastaufnahme unter ihm Platz hat.

Als zweckmäßig wird es jedoch angesehen, daß jedes Seitenteil zwei in Horizontalrichtung nebeneinander angeordnete Vorsprünge aufweist, wobei diese vorteilhafterweise in gleicher Höhenlage angeordnet sind. Dabei können sich die Vorsprünge auf der Außenseite der Seitenteile innerhalb des von diesen eingenommenen Bereiches befinden. Es besteht jedoch auch die Möglichkeit, daß die Vorsprünge bezogen auf die Längsrichtung der Werkstücke vor die senkrechten Außenkanten der Seitenteile gesetzt sind.

Je nach Ausbildung des insoweit vorstehend beschriebenen Gegenstandes kann jedem Seitenteil nur ein Lastarm zugeordnet sein, der dann an seinem unteren Ende die beiden in ihrer Position verstellbaren Lastaufnahmen trägt. Gleichermaßen besteht jedoch auch die Möglichkeit, jedem Seitenteil zugeordnet zwei nebeneinander angeordnete Lastarme vorzusehen, von denen jeder an seinem Ende mit einer Lastaufnahme bestückt ist.

Was die Ausbildung der Joche betrifft, so ist es vorteilhaft, daß die Seitenteile je durch wenigstens zwei sie in Längsrichtung der Werkstücke begrenzende, sich im wesentlichen vertikal erstreckende Profilstäbe aus Metall gebildet sind, und daß das Bodenteil wenigstens zwei sich im wesentlichen horizontal quer zur Längsrichtung der Werkstücke erstreckende Profilstäbe aus Metall aufweist, wobei die Enden jedes dieser Profilstäbe mit den unteren Enden eines Paares sich quer zur Längsrichtung der Werkstücke einander gegenüber stehender, vertikaler Profilstäbe verbunden sind.

Hier können die vertikalen Profilstäbe L-förmigen Materialquerschnitt aufweisen und derart angeordnet sein, daß einer der L-Schenkel von den Werkstücken fort und die anderen L-Schenkel von auf einer Seite der Werkstücke benachbarten Profilstäben voneinander fort gerichtet sind. Andererseits können die horizontalen Profilstäbe U-förmigen oder rohrförmigen Materialquerschnitt aufweisen, wobei die U-Profile derart angeordnet sein können, daß die Öffnungen der Profilquerschnitte in zueinander parallele oder voneinander fort entgegengesetzte Richtungen weisen.

Ferner kann vorgesehen sein, daß die den jeweiligen Seitenteilen zugeordneten vertikalen Profilstäbe im Bereich der oberen Hälfte ihrer Längserstreckung durch eine zwischengesetzte, in einer im wesentlichen vertikalen Ebene gelegene Metallplatte miteinander verbunden sind, wobei die den Werkstücken zugewandten vertikalen Oberflächen der Metallplatten in einer Ebene mit den den Werkstücken zugewandten Oberflächen der vertikalen Profilstäbe angeordnet sind. Hier genügt es, daß die quer zur Längsrichtung der Werkstücke gelegene horizontale Dicke der Metallplatten geringer als die des Profilquerschnittes der vertikalen Profilstäbe in der gleichen Richtung ist.

Andererseit kann vorgesehen sein, daß zwischen den in Längsrichtung der Werkstücke nebeneinander liegenden Enden der horizontalen Profilstäbe und innerhalb des von den Werkstücken eingenommenen vertikalen Querschnittsbereiches je ein zur Werkstücklängsrichtung paralleles Metallblech befestigt ist, dessen Ober- und Unterkante innerhalb des Höhenbereiches liegen, der durch die Vertikalerstreckung des Querschnittes der Profilstäbe gebildet ist.

Durch diese vorstehend geschilderten Gestaltungsmerkmale ergeben sich insgesamt sehr stabile und doch einfach herzustellen Joche, denn die Joche sind insgesamt aus Bauteilen zusammengesetzt, die sich von marktgängigen Materialien nur durch einfaches Sägen oder Abscheren herstellen lassen.

Werden nun die Metallplatten so ausgebildet, daß sie eine die Oberenden der zugeordneten Profilstäbe überragende Höhe aufweisen, wobei die beiden Seitenkanten des die Profilstäbe überragenden Teiles der Metallplatten zur Oberkannte der Metallplatten hin aufeinander zu verlaufende Abschrägungen aufweisen, so lassen sich dadurch in einfacher Weise aufeinander gestapelte Joche in Längsrichtung der Werkstücke gegenseitig zentrieren. Das gleiche ist bezüglich der Positionierung übereinander gestapelter Joche quer zur Längsrichtung der Werkstücke mit Hilfe der unteren Metallbleche möglich, wenn diese bezüglich ihrer Oberkante einen größeren gegenseitigen Abstand aufweisen als bezüglich ihrer Unterkanten, also so schräg gestellt sind, daß sie im Zusammenwirken mit den nach oben vorstehenden Teilen der Metallplatten die übereinander angeordneten Joche beim Aufeinandersetzen quer zur Längsrichtung der Werkstücke ausrichten.

Bei der so insgesamt beschriebenen Ausbildung der Joche kann nun für die Vorsprünge in Anlehnung an die bereits weiter oben gemachten Ausführungen vorgesehen sein, daß bei Ausstattung der Seitenteile mit einem Vorsprung dieser etwa horizontal mittig auf der werkstückabgewandten Seite der Metallplatten angeordnet ist.

Sind für die Ausstattung der Seitenteile zwei Vorsprünge vorgesehen, so können diese auf der werkstückabgewandten Seite der Metallplatten je im Stoßwinkel zwischen vertikalem Profilstab und Metallplatte angeordnet sein. Es besteht aber auch die Möglichkeit, daß dann die Vorsprünge an den voneinander fort gerichteten Seiten der einem Seitenteil zugeordneten vertikalen Profilstäbe angeordnet sind.

In diesen Fällen ist es zweckmäßig, daß die Vorsprünge im Bereich der oberen Hälfte der Längserstreckung der Profilstäbe sitzen. Außerdem ist es von Vorteil, daß die Vorsprünge der Seitenteile einen in Vertikalrichtung offenen Hohlquerschnitt aufweisen, denn dann können dazu passend die freien, mit den Vorsprüngen in Eingriff gelangenden Enden der Lastaufnahmen mit einer nach oben vorstehenden Nase versehen werden, über die sie mit den Vorsprüngen in formschlüssigen Eingriff bringbar sind. Das gewährleistet dann den gegenseitigen Eingriff auch bei ungünstigen Umständen, zum Beispiel einem Stromausfall.

Eine andere Möglichkeit ist dadurch gegeben, daß bei Ausstattung der Seitenteile mit zwei Vorsprüngen sich die horizontalen Profilstäbe bis zur vertikalen Außenseite der Seitenteile erstrecken und als U-förmig profilierte Profilstäbe mit voneinander fort gerichteten Profilöffnungen ausgebildet sind, und daß die oberen Profilschenkel der Profilstäbe die Vorsprünge bilden. Hier ergeben sich die Vorsprünge also aus der Gestaltung der Joche selbst, so daß dafür keine gesonderten Bauteile anzubringen sind.

Für die Ausbildung der Hubanlage kann vorgesehen sein, daß sie einen sich im wesentlichen über den Längenbereich der Werkstücke erstreckenden, höhenverfahrbaren Hubbalken aufweist, und daß an den Seiten des Hubbalkens die den Seitenteilen der Joche zugeordneten, sich vom Hubbalken in der Vertikalebene der zugehörigen Vorsprünge nach unten erstreckenden Lastarme befestigt sind.

Ist hier für jedes Seitenteil ein Lastarm vorgesehen, so können, wie bereits erwähnt, diese Lastarme an ihren Unterenden je zwei in Horizontalrichtung zwischen einer ausgefahrenen und einer eingezogenen Position verstellbare Aufnahmen aufweisen.

Sind dagegen für jedes Seitenteil zwei in einer gemeinsamen, zu den Seitenteilen parallelen Ebene gelegene Lastarme vorgesehen, so können solche Lastarme am Hubbalken je um eine horizontale, sich quer zur Längsrichtung der Werkstücke erstreckende Achse schwenkbar gelagert und mit Mitteln zur Schwenkbetätigung verbunden sein, wobei dann die Lastarme an ihren Unterenden horizontal in Richtung auf den zugeordneten Vorsprung vorstehend eine Lastaufnahme aufweisen.

Anders ist es hier für quer zur Längsrichtung der Werkstücke verstellbare Lastaufnahmen. Diese erfordern entsprechende Lastarme, die am Hubbalken je um eine horizontal sich parallel zur Längsrichtung der Werkstücke erstreckende Achse schwenkbar gelagert sind.

Die vorstehend beschriebene Gestaltung der Joche sowie der damit zusammenwirkenden Lastarme gibt nun aber in Weiterbildung der Erfindung auch die Möglichkeit, daß die Lastarme oberhalb der Lastaufnahmen eine die Höhe wenigstens zweier aufeinanderstehender Joche überbrükkende freie Länge aufweisen oder daß die Lastarme übereinander mehrere gegebenenfalls mit Nasen versehene Lastaufnahmen für die Vorsprünge aufeinanderstehender Joche aufweisen. Auf diese Weise können entsprechend der Zahl übereinander angeordneter Lastaufnahmen mehrere Joche und damit auch mehrerer aufeinander sitzende Werkstückgebinde angehoben und umgesetzt werden, so daß man folglich schneller ein in einem Stapel befindliches Material freibekommt, um dieses an einen Platz beispielsweise zur Weiterverarbeitung zu verbringen.

Zweckmäßig ist es dabei im zweitgenannten Falle, daß der gegenseitige Abstand übereinander angeordneter Lastaufnahmen eines Lastarmes wenigstens geringfügig größer als der gegenseitige Abstand der Vorsprünge aufeinandergesetzter Joche ist. Durch einen solchen Abstand der Lastaufnahmen wird erreicht, daß jedes Joch durch korrespondierende Lastaufnahmen einzeln angehoben wird und an seinen Angreifstellen nur die Last tragen muß, die seinem eigenen Gewicht zusätzlich dem zugehörenden Gewichtsanteil der Werkstücke entspricht. Die Lastaufnahmen und Vorsprünge des einzelnen Joches sind also auf diese Weise nicht durch das Gewicht mehrerer aufeinander gestapelter Joche belastet.

Was die Hubanlage der erfindungsgemäßen Vorrichtung betrifft, so kann diese als oberhalb der Joche unter dem Dach einer Lagerhalle installierter Kran ausgebildet sein, durch den der Lastbalken zusammen mit den von ihm getragenen Lastarmen auf- und abbewegbar sowie horizontal verfahrbar ist. Als besonders vorteilhaft hat es sich jedoch erwiesen, daß die Hubanlage in Portalbauweise ausgeführt ist mit außerhalb der Enden der Werkstücke quer zu deren Längserstreckung verfahrbaren Vertikalstützen und wenigstens einem deren Oberenden miteinander verbindenden, sich zu den Werkstücken parallel erstreckenden Längsträger, und daß der Lastbalken mit seinen Enden an den Vertikalstützen geführt vertikal verfahrbar ist. Dabei können dann die Vertikalstützen der Hubanlage quer zur Längserstreckung der Werkstücke bodenverfahrbar sein. Eine solche Hubanlage kann somit, da sie auf dem Boden abgestützt ist, insbesondere leichter in einer bestehenden Halle nachgerüstet werden als eine Deckenkrananlage.

Schließlich kann der quer zur Längsrichtung der Werkstücke gegebene Abstand der einem Joch zugeordneten Lastarme im Hinblick auf unterschiedliche Jochbreiten verstellbar ausgebildet sein. Dadurch lassen sich in einem größeren Werkstücklager auch mehrere Jochgrößen anwenden, wobei aber für einen jeweiligen Jochstapel natürlich nur eine Jochgröße einsetzbar ist.

Die so insgesamt beschriebene erfindungsgemäße Vorrichtung erlaubt es, die Ein- und Auslagerbewegungen selbsttätig über einen Rechner gesteuert auszuführen, über den auch die von den Jochen aufgenommenen Werkstücke nach Art eines chaotischen Lagers verwaltet werden können.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: die vereinfachte Seitenansicht einer Vorrichtung zum Lagern und Transportieren von langen Werkstücken gemäß der Schnittlinie I-I in Figur 2;
- Figur 2: eine Schnittansicht gemäß der Schnittlinie II-II in Figur 1;
- Figur 3: eine Einzelheit aus Figur 1 und 2 in vergrößerter perspektivischer Darstellung;
- Figur 4: die Stirnansicht zweier aufeinander stapelbarer Joche in nach oben auseinandergezogenen Zustand;
- Figur 5: eine Oberansicht eines Joches gemäß Figur 4;
- Figur 6: die Seitenansicht eines Joches gemäß Figur 4 zusammen mit den zugeordneten Lastaufnahmemitteln in deren Stellung zur freien Vertikalbewegung;
- Figur 7: die Darstellung gemäß Figur 6 mit den Lastaufnahmemitteln in deren Stellung zum Anheben eines Joches;
- Figur 8: die Verbindung der Lastaufnahmemittel gemäß Figur 6 und 7 mit dem Lastbalken der Hubanlage;
- Figur 9: eine andere Gestaltung der Lastaufnahmemittel in der Darstellung gemäß Figur 8;
- Figur 10: eine Einzelheit aus Figur 3 in vergrößerter Darstellung;
- Figur 11 bis 15: Abwandlungen der Lastaufnahmemittel in der Darstellungsweise gemäß Figur 6;
- Figur 16 und 17: eine Abwandlung des Gegenstandes gemäß Figur 8 in Seitenansicht und Draufsicht;
- Figur 18: eine Abwandlung des Gegenstandes gemäß Figur 3 und
- Figur 19 und 20: Abwandlungen der Lastaufnahmemittel in der Darstellungsweise gemäß Figur 6.

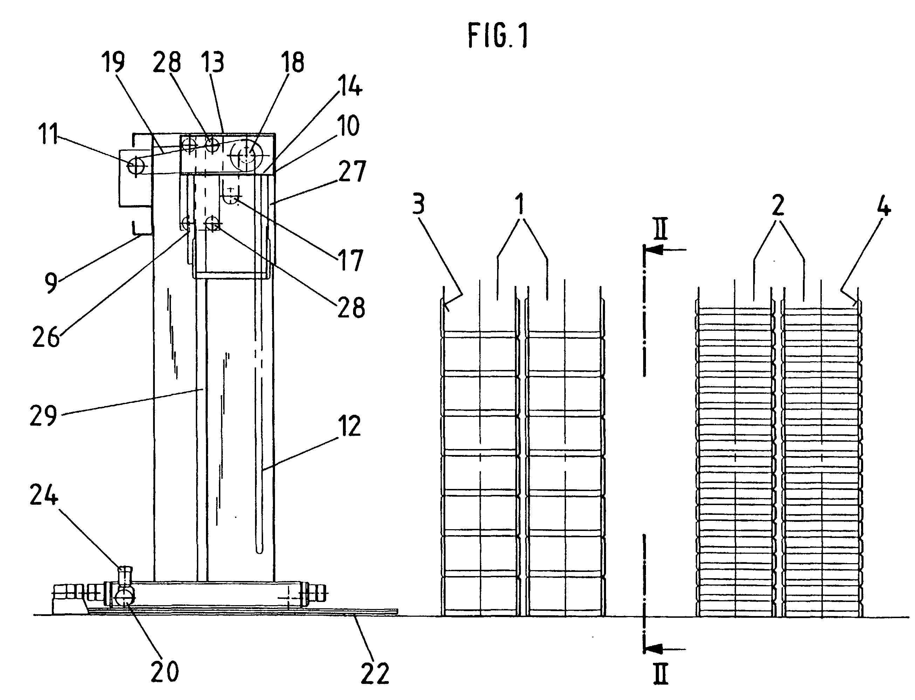

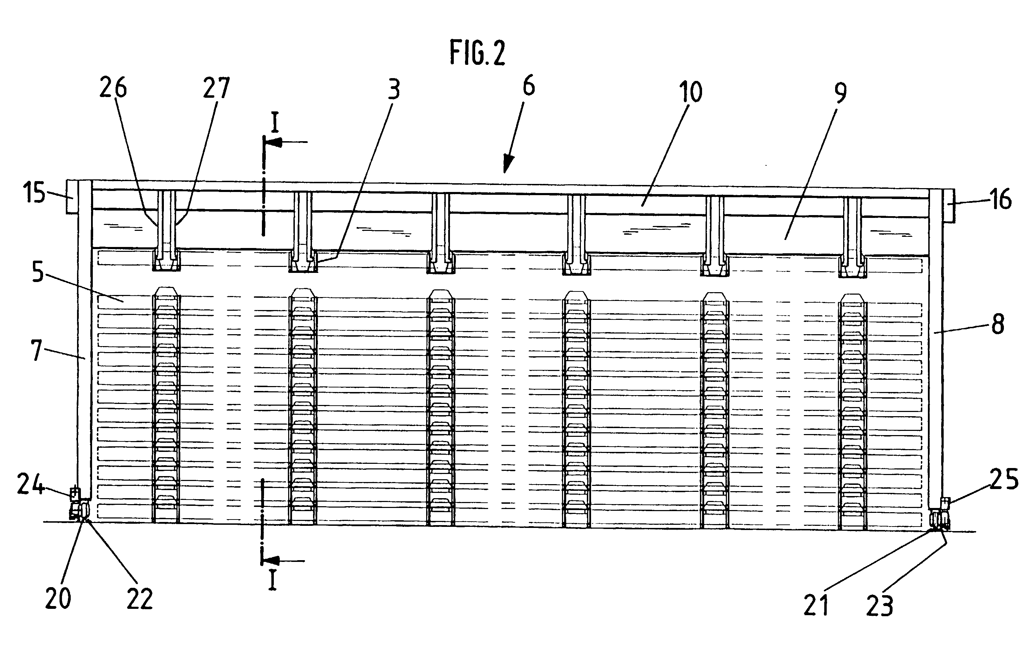

Wie aus den Figuren 1 und 2 ersichtlich, sind in einem Lager für lange Werkstücke 5 Stapel 1, 2 aufeinanderstehender Joche 3, 4 nebeneinander angeordnet, wobei, wie Figur 2 zeigt, zu einer Sorte langer Werkstücke 5 bezogen auf Figur 1 senkrecht hintereinander mehrere, in diesem Falle sechs Joche 3 gehören, damit die langen Werkstücke 5 über ihre Längserstreckung sicher gehalten sind, sich also nicht durchbiegen können.

Über dem von den Stapeln 1, 2, von denen hier nur einige prinzipiell veranschaulicht sind, eingenommenen, blockförmigen Bereich ist eine Hubanlage in Form eines Portalkrans 6 verfahrbar, der neben den Stirnenden der Werkstücke 5 quer zu deren Längserstreckung bodenverfahrbare Vertikalstützen 7, 8 aufweist, deren Oberenden durch wenigstens einen sich zu den Werkstücken 5 parallel erstreckenden Längsträger 9 miteinander verbunden sind.

Neben dem Längsträger 9 befindet sich ein Lastbalken 10, der mit seinen axialen Enden über Rollen 28 an Schienen 29 der Vertikalstützen 7, 8 geführt vertikal verfahrbar ist, wozu durch eine motorgetriebene Welle 11 getriebene Hubmittel dienen. Diese bestehen aus im Bereich der beiden Enden des Lastbalkens 10 angeordneten Ketten 12, die mit ihrem einen Ende bei 13 im Kopfbereich der Vertikalstützen 7, 8 und mit ihrem anderen Ende bei 14 an den Anbauteilen 15, 16 angeschlagen sind. Zwischen diesen beiden Enden sind die Ketten 12 in der aus Figur 1 ersichtlichen Weise an den Enden des Lastbalkens 10 je um ein Umlenkrad 17 sowie bei den Anbauteilen 15, 16 je um ein angetriebenes Rad 18 geführt, wobei letztere über ein Umschlingungsmittel 19 durch die Welle 11 drehantreibbar sind. Die auf diese Weise durchführbare Vertikalbewegung des Lastbalkens 10 ist an sich bekannt und soll daher nicht noch näher erläutert werden.

Was die Bodenverfahrbarkeit des Portalkrans 6 betrifft, so weisen die Vertikalstützen 7, 8 an ihren Fußenden Rollen 20, 21 für Schienen 22, 23 auf, die durch Motoren 24, 25 antreibbar sind.

Wie insbesondere aus Figur 2 ersichtlich, ist der Lastbalken 10 den noch zu beschreibenden Seitenteilen der Joche 3 zugeordnet beidseits mit Lastarmen 26, 27 bestückt, über die die Joche 3, 4 an ihren Seitenteilen ergriffen und so durch Fahrbewegungen des Lastbalkens 10 sowie des Portalkrans 6 vertikal und horizontal bewegt werden können.

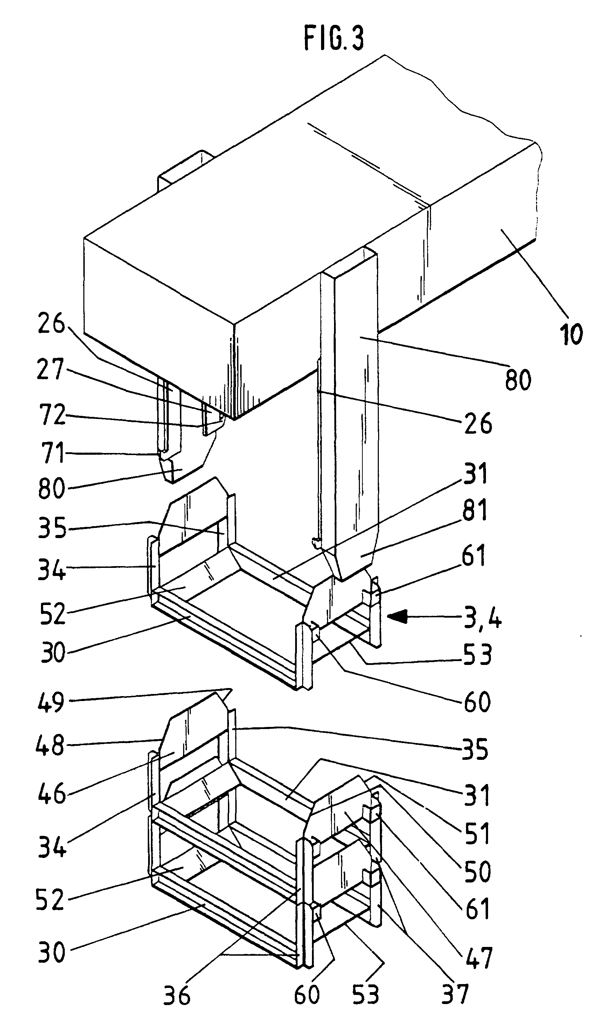

Figur 3 zeigt vereinfacht in vergrößerter, perspektivischer Darstellung das linke Ende des Lastbalkens 10 aus Figur 2 mit einem Joch 3, 4 und darunter zwei aufeinanderstehende Joche eines Stapels, wobei sich die Einzelheiten aus der nachfolgenden Beschreibung ergeben.

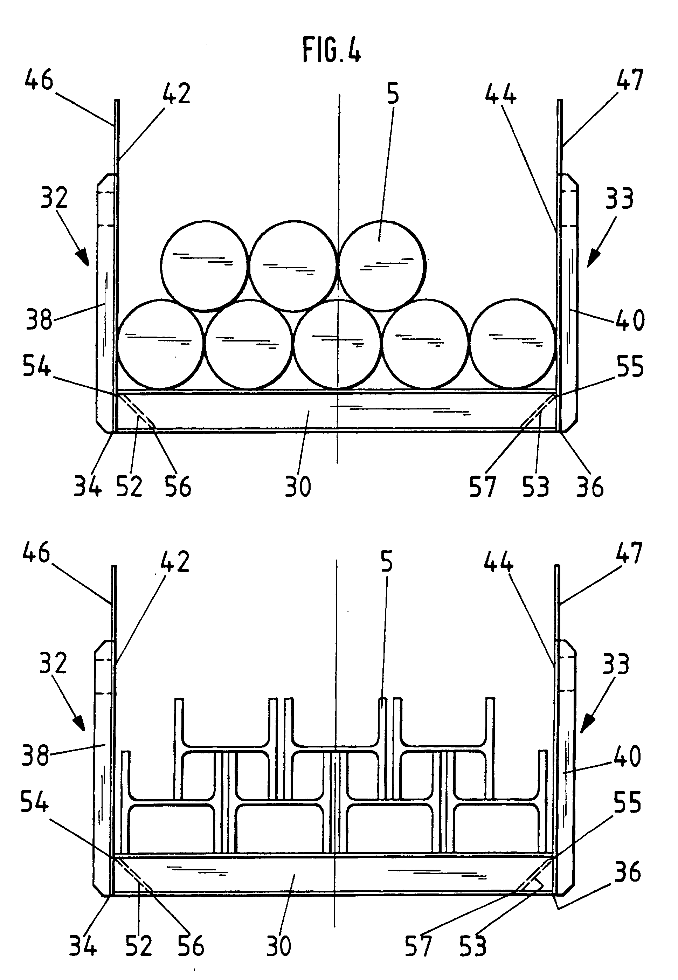

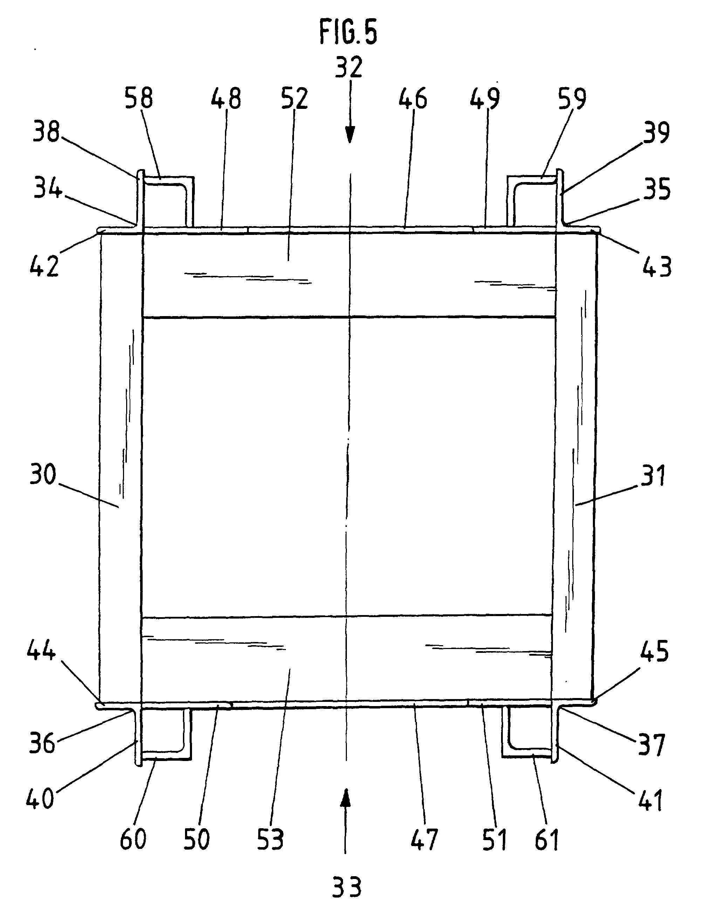

Anhand der Figuren 4 bis 7 sei nun zunächst der Aufbau der Joche 3 bzw. 4 aus Figur 1 bis 3 erläutert, wobei dieser Aufbau grundsätzlich immer der gleiche ist, sich die Joche 3 und 4 vielmehr nur durch ihre Höhe und damit ihr Fassungsvermögen für die langen Werkstücke 5 unterscheiden.

Als Bodenteil weisen die Joche zwei mit Abstand parallel zueinander angeordnete, U-förmige Profile 30, 31 auf, die mit ihrer Profilöffnung voneinander fort gerichtet angeordnet sind.

Mit den Enden der Profile 30, 31 verbunden sind zur Bildung der Seitenteile 32, 33 der Joche vertikale Metallprofile 34, 35 bzw. 36, 37, deren L-Schenkel 38 bis 41 von den Werkstücken fort gerichtet sind, während die anderen L-Schenkel 42 bis 45 jedes Seitenteils 32 bzw. 33 voneinander fort gerichtet sind.

Die den jeweiligen Seitenteilen 32, 33 zugeordneten vertikalen Profilstäbe 34, 35 bzw. 36, 37 sind im Bereich der oberen Hälfte ihrer Längserstreckung durch eine zwischengesetzte, in einer im wesentlichen vertikalen Ebene gelegene Metallplatte 46, 47 miteinander verbunden, wobei die den Werkstücken 5 zugewandten vertikalen Oberflächen der Metallplatten 46, 47 in einer Ebene mit den den Werkstücken zugewandten Oberflächen der vertikalen Profilstäbe 34, 35 bzw. 36, 37 angeordnet sind. Außerdem ist die horizontale Dicke der Metallplatten 46, 47 wesentlich geringer als die des Profilquerschnittes der vertikalen Profilstäbe 34 bis 37.

Die Metallplatten 46, 47 haben eine die Oberenden der zugeordneten Profilstäbe 34, 35 bzw. 36, 37 überragende Höhe, wobei die Seitenkanten des überragendens Teiles zur Oberkante der Metallplatten 46, 47 hin aufeinander zu verlaufende Abschrägungen 48, 49 bzw. 50, 51 aufweisen.

Im Bodenbereich der Joche sind zwischen den Ende der horizontalen Profilstäbe 30, 31 innerhalb des von den Werkstücken 5 eingenommenen vertikalen Querschnittsbereiches zur Werkstücklängsrichtung parallele Metallbleche 52, 53 eingesetzt, die so angeordnet sind, daß ihre Oberkanten 54, 55 sowie Unterkanten 56, 57 innerhalb des Höhenbereiches liegen, der durch die Vertikalerstreckung des Querschnittes der Profilstäbe 30, 31 gebildet ist. Außerdem sind die Metallbleche 52, 53 derart schräg gestellt, daß ihre Oberkanten 54, 55 einen größeren gegenseitigen Abstand aufweisen als ihre Unterkanten 56, 57.

Auf der werkstückabgewandten Seite haben die Seitenteile 32, 33 je zwei Vorsprünge 58, 59 bzw. 60, 61, die auf der werkstückabgewandten Seite der Metallplatten 46, 47 je im Stoßwinkel zwischen den vertikalen Profilstäben 34 bis 37 und den Metallplatten 46, 47 angeordnet sind. Die Vorsprünge 58 bis 61 sitzen somit im Bereich der oberen Hälfte der Längserstreckung der Profilstäbe 34 bis 37 und sind aus noch zu erläuternden Gründen als nach oben und unten offene Hohlquerschnitte ausgebildet.

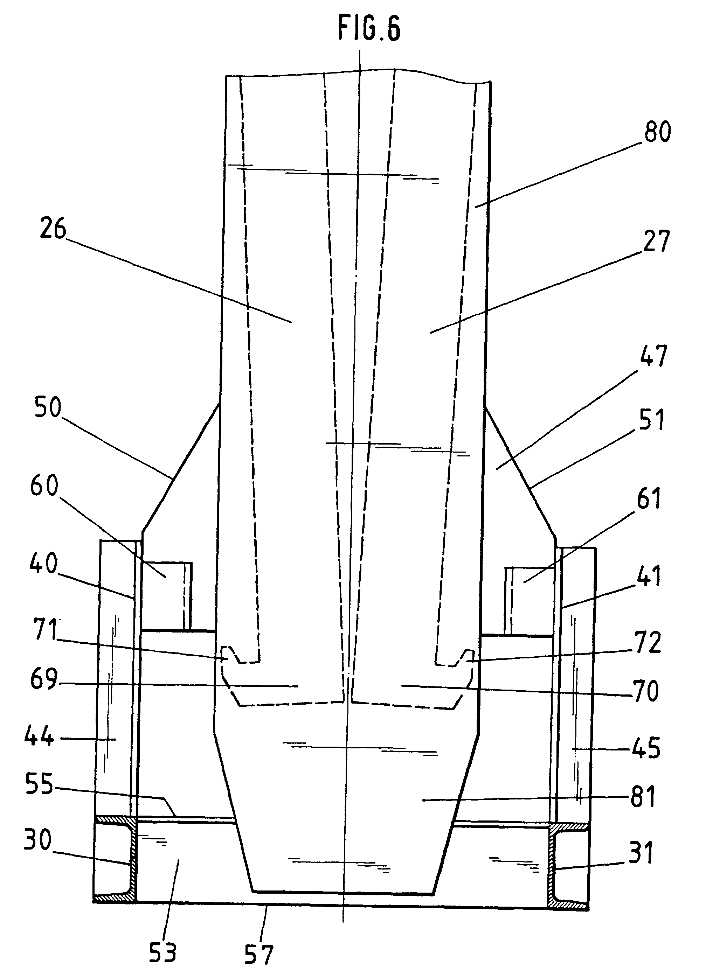

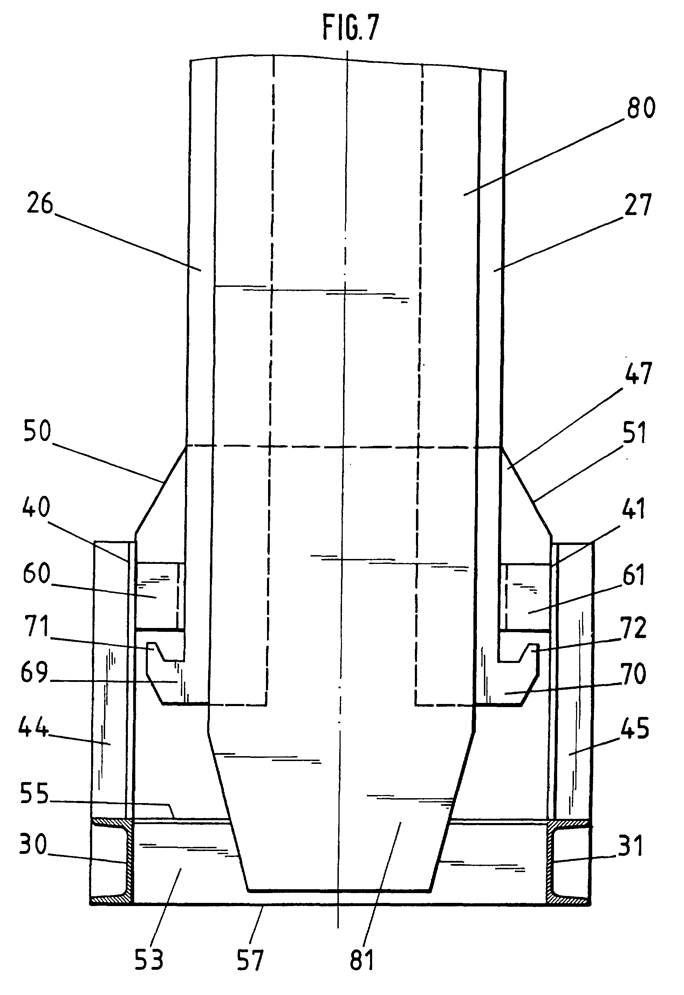

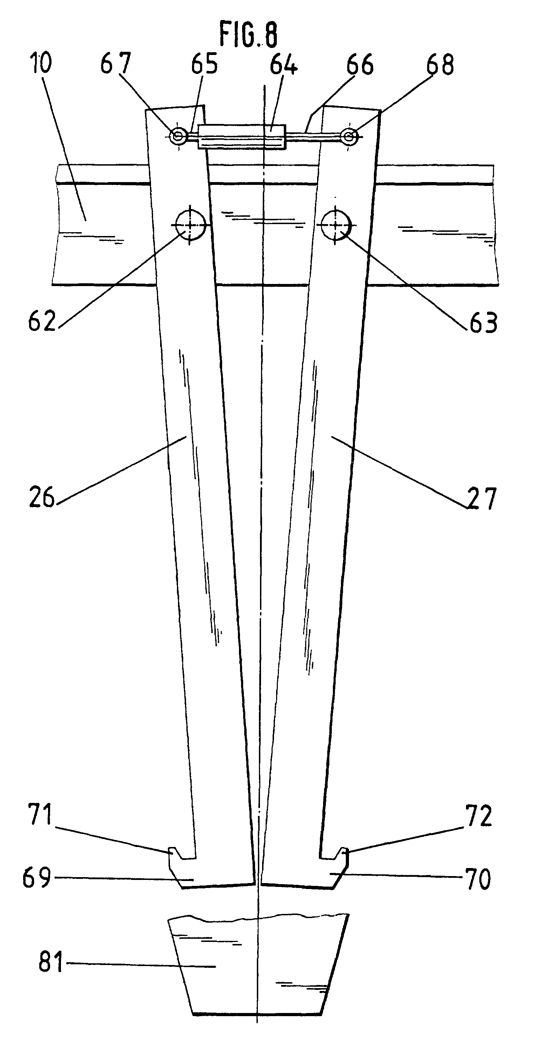

Über diese Vorsprünge 58 bis 61 können nun die Joche 3 bzw. 4 angehoben und transportiert werden. Dazu dienen die bereits anhand der Figuren 1 und 2 erwähnten, für jedes Seitenteil der einer Werkstückart zugehörenden Joche vorgesehenen, vertikalen Lastarme 26, 27, die in vergrößerter Darstellung wieder aus Figur 6 und 7 ersichtlich sind. Diese Lastarme sind, wie bei der Einzeldarstellung anhand der Figur 8 ersichtlich, im Bereich ihrer oberen Enden am Hubbalken 10 je um eine horizontale, sich quer zur Längsrichtung der Werkstücke 5 erstreckende Achse 62, 63 schwenkbar gelagert und mit Mitteln zur Schwenkbetätigung verbunden, die im Falle der Figur 8 vereinfacht durch eine am Hubbalken 10 befestigte Stellvorrichtung 64 dargestellt ist, die zum Beispiel horizontal hin- und herverstellbare Kolbenstangen 65, 66 aufweist, die bei 67, 68 an den Lastarmen 26, 27 drehbar angelenkt sind.

Mit Hilfe dieser Stellvorrichtung 64 lassen sich nunmehr bezogen auf die Figuren 6 und 7 die Lastarme 26, 27 zwischen der in Figur 6 dargestellten, bezüglich der Joche nicht wirksamen Position und der in Figur 7 dargestellten, zum Anheben der Joche geeigneten Position verschwenken. Damit können die Lastarme 26, 27 bei der in Figur 6 dargestellten Position frei von oben zwischen den Vorsprüngen 60, 61 hindurch nach unten gefahren werden. Werden nun die Lastarme 26, 27 in die aus Figur 7 ersichtliche Position geschwenkt, so kommen endständig den Vorsprüngen 60, 61 zugeordnete Lastaufnahmen 69, 70 der Lastarme 26, 27 unter den Vorsprüngen 60, 61 zu stehen, so daß nunmehr das dargestellte Joch durch entsprechende Betätigung des Hubbalkens 10 angehoben werden kann, indem dann die Lastaufnahmen 69, 70 von unten gegen die Vorsprünge 60, 61 in Anlage kommen. Zur weiteren Sicherung dieser Verbindung sind die Lastaufnahmen 69, 70 an ihren freien Enden außerdem noch mit nach oben ragenden Nasen 71, 72 versehen, die beim Anheben der Lastarme 26, 27 in den bereits erwähnten Hohlquerschnitt der Vorsprünge 60, 61 eintauchen.

Wird nun bei der anhand der Figur 7 in bezug auf ein Seitenteil eines Joches geschilderten Position der Lastarme 26, 27 der Hubbalken 10 angehoben, so führt dies zu der anhand der in Figur 2 oben geschilderten Situation, die - einer Sorte langer Werkstücke 5 zugeordnet - eine Reihe miteinander fluchtender Joche 3 zeigt, die gemeinsam mit dem Hubbalken 10 angehoben worden sind. Nunmehr kann der Portalkran 6 senkrecht zur Ebene der Figur 2 verfahren werden, um die so vom Stapel abgehobenen Werkstücke auf einen anderen Stapel umzusetzen oder an einen sonstigen Platz zu bringen, von dem aus eine weitere Handhabung der Werkstücke stattfindet.

Benötigt man nun aus einem der beispielhalber in Figur 1 dargestellten Stapel Werkstücke, die sich nicht in der obersten Position befinden, so müssen die über den gewünschten Werkstücken stehenden Werkstückgebinde zunächst einzeln abgehoben und auf einen anderen Stapel umgesetzt werden, damit die gewünschten Werkstücke frei werden.

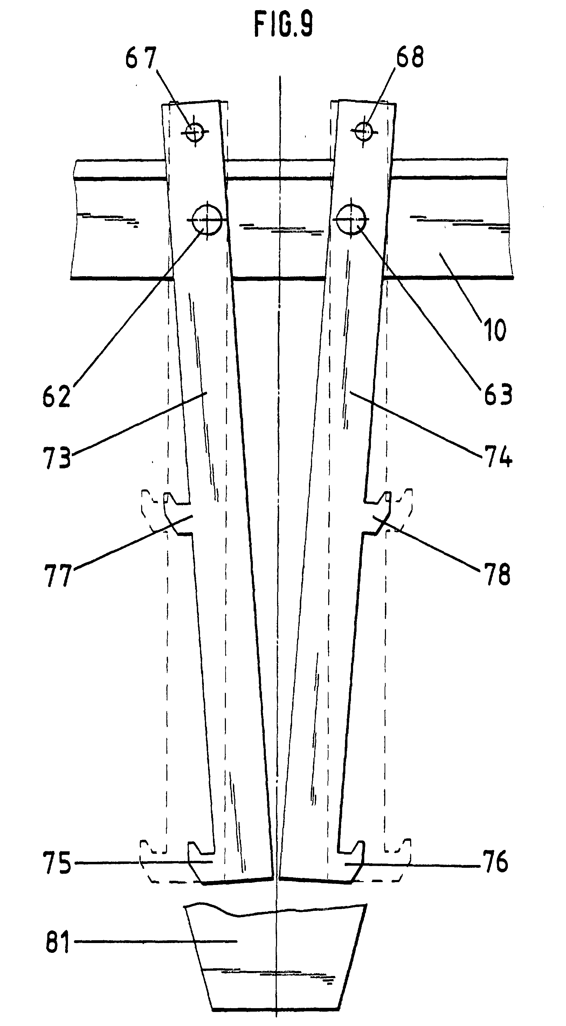

Um diese Arbeit zu erleichtern und zu beschleunigen, kann vorgesehen werden, daß, wie in Figur 8 veranschaulicht, die Lastarme 26, 27 oberhalb der Lastaufnahmen 69, 70 eine die Höhe wenigstens zweier aufeinanderstehender Joche überbrückende freie Länge aufweisen. Es kann jedoch auch, wie Figur 9 zeigt, vorgesehen werden, daß die vertikalen Lastarme 73, 74 außer ihren unteren Lastaufnahmen 75, 76 mit weiteren, darüber im Abstand angeordneten Lastaufnahmen 77, 78 ausgestattet sind, wobei der vertikale Abstand der einem Lastarm 73 bzw. 74 zugeordneten Lastaufnahmen 75, 77 bzw. 76, 78 wenigstens dem vertikalen Abstand der zugeordneten Vorsprünge zweier aufeinander stehender Joche entsprechen muß. Zweckmäßig ist es jedoch, wie bereits eingangs geschildert, diesen vertikalen Abstand etwas größer zu wählen.

Durch diese Ausgestaltung gemäß Figur 8 oder 9 besteht nun die Möglichkeit, bei einer Hubbewegung des Hubbalkens 10 sogleich zwei übereinander positionierte Gebinde von Werkstücken anzuheben und umzusetzen, um auf diese Weise schneller an darunter positionierte Werkstücke zu kommen.

Selbstverständlich können in weiterer Abänderung des Beispieles gemäß Figur 8 oder 9 die Lastarme 26, 27 bzw. 73, 74 noch länger ausgebildet werden, um eine noch größere Zahl übereinander angeordneter Lastaufnahmen zu tragen.

Soweit nun vorstehend die Umsetzbewegung und Stapelung der Joche geschildert wurde, ist es dabei auch von Bedeutung, daß die Joche bei ihrer Stapelung gut aufeinander zentriert sind. Dabei spielen die geschilderten Metallplatten 46, 47 sowie die Metallbleche 52, 53, die an sich dem stabilen Aufbau der Joche dienen, durch ihre geschickte Anordnung zusätzlich eine entscheidende Rolle.

Figur 4 zeigt übereinander zwei gleiche Joche. Stellt man sich nun vor, daß das obere Joch auf das untere abgesetzt wird, so ist ersichtlich, daß bei dieser Absetzbewegung die Metallbleche 52, 53 des oberen Joches in Berührung mit den oberen Kanten der Metallplatten 46, 47 des unteren Joches treten, wenn nicht eine genaue gegenseitige Zentrierung in Vertikalrichtung vorliegt. Dadurch, daß die Metallbleche 52, 53 schräg gestellt sind, führt diese genannte Berührung zu einem Einfädelvorgang, der sicherstellt, daß das obere Joch bezogen auf die Darstellung in Figur 4 genau mittig auf dem unteren Joch zu sitzen kommt.

Gleiches geschieht für die gegenseitige Zentrierung senkrecht zur Darstellung in Figur 4 durch die Ausbildung der Oberenden der Metallplatten 46, 47, wozu auf die Figuren 6 bzw. 7 verwiesen wird. Wie anhand dieser Figuren bereits geschildert, weisen die Oberenden der Metallplatten 46 bzw. 47 Abschrägungen 50, 51 auf. Werden nun zwei Joche aufeinander gesetzt, so geraten die vertikalen Profilstäbe 34, 35 auf die Abschrägungen 48, 49 und die vertikalen Profilstäbe 36, 37 auf die Abschrägungen 50, 51, wenn die Joche nicht genau fluchtend übereinander angeordnet sind. Entlang dieser Schrägen 48 bis 51 können dann die Profilstäbe 34 bis 37 so lange abgleiten, bis bezogen auf die Darstellung gemäß Figur 6 bzw. 7 eine genau mittige Einrichtung übereinander sitzender Joche erreicht ist.

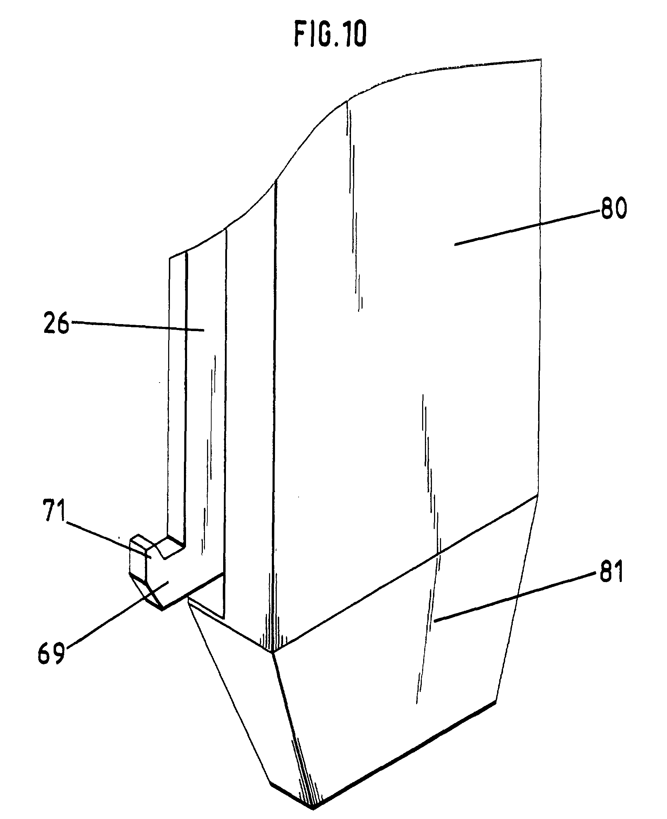

Weiterhin ist noch ein Führungsprofil 80 zu erwähnen, das, wie insbesondere aus den Figuren 3 bis 10 ersichtlich, vertikal und parallel unmittelbar neben den Lastarmen 26, 27 bzw. 73, 74 angeordnet ist. Dieses Führungsprofil weist an seinem unteren Ende eine sowohl in Längsrichtung der Werkstücke als auch quer dazu keilförmig ausgebildete Verjüngung 81 auf, die ebenfalls dazu dient, beim Herabtauchen der Lastarme deren Durchtritt zwischen den Vorsprüngen falls nötig zu zentrieren.

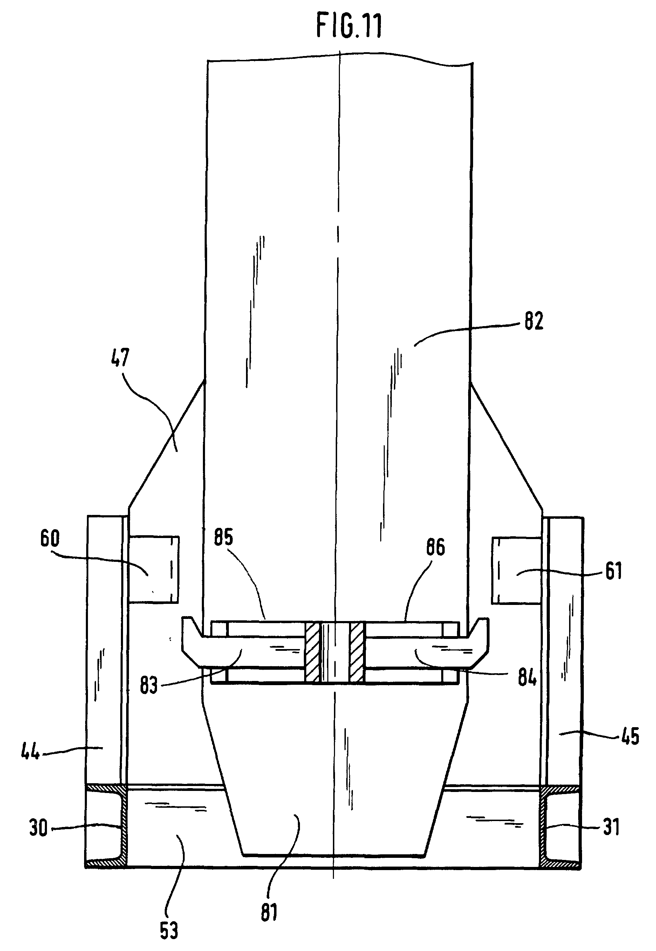

Die anhand der Zeichnung dargestellte Ausführungsform bedient sich, wie insbesondere aus den Figuren 6 bis 9 ersichtlich, zweier vertikaler Lastarme 26, 27 bzw. 73, 74 mit Lastaufnahmen 69, 70 bzw. 75 bis 78 im Zusammenwirken mit Vorsprüngen 58 bis 61. Genausogut ist es jedoch denkbar, daß die Lastarme 26, 27 bzw. 73, 74 in der aus Figur 11 ersichtlichen Weise durch einen einzigen, starr am Hubbalken 10 vertikal angebrachten Lastarm 82 ersetzt werden, der beispielsweise an seinem unteren Ende horizontal aus- und einfahrbare Lastaufnahmen 83, 84 aufweist. Dabei kann deren Betätigung beispielsweise hydraulisch über die dargestellten Zylinder-Kolben-Aggregate 85, 86 erfolgen, die am Ende des einzigen Lastarms 82 angeordnet sind und deren Schubstangen die verstellbaren Lastaufnahmen 83, 84 bilden. Auch hier können wieder längere Lastarme vorgesehen werden oder solche verstellbaren Lastaufnahmen mehrfach an einem Lastarm übereinander angeordnet sein, um auf diese Weise mehrere aufeinander stehende Joche ergreifen zu können.

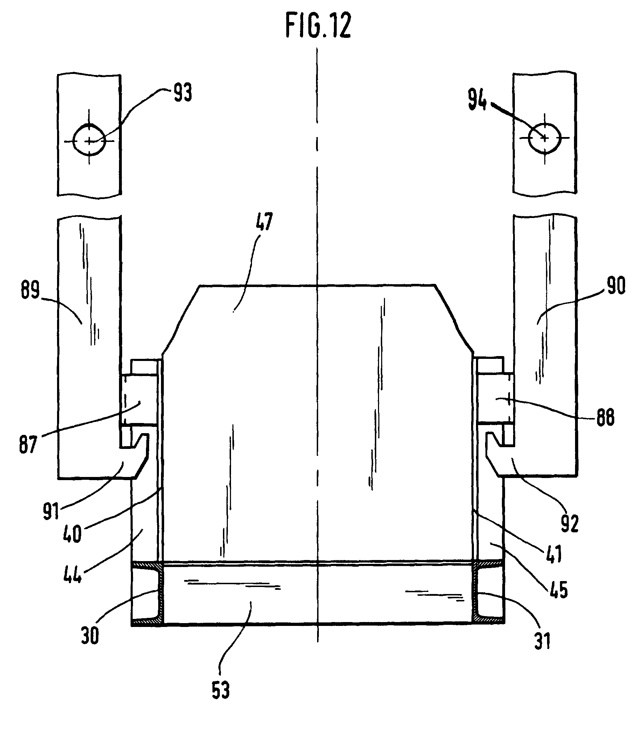

Die Vorsprünge 58 bis 61 der Joche sind bei der geschilderten Ausführungsform in den Eckwinkeln zwischen den Metallplatten 46, 47 und den vertikalen Profilstäben 34 bis 37 angeordnet. Genausogut können diese Vorsprünge aber auch in den durch das L-Profil der Profilstäbe 34 bis 37 gebildeten Ecken angeordnet werden, wie dies Figur 12 mit den Vorsprüngen 87, 88 zeigt. Dann müssen nur beispielsweise die den Lastarmen 26, 27 entsprechenden und um Achsen 93, 94 am Hubbalken 10 schwenkbar gelagerten Lastarme 89, 90 auseinandergerückt und bezüglich einer vertikalen Achse um 180° gedreht sein, so daß sie mit ihren Lastaufnahmen 91, 92 diese anders positionierten Vorsprünge 87, 88 von außerhalb der Joche untergreifen könnten.

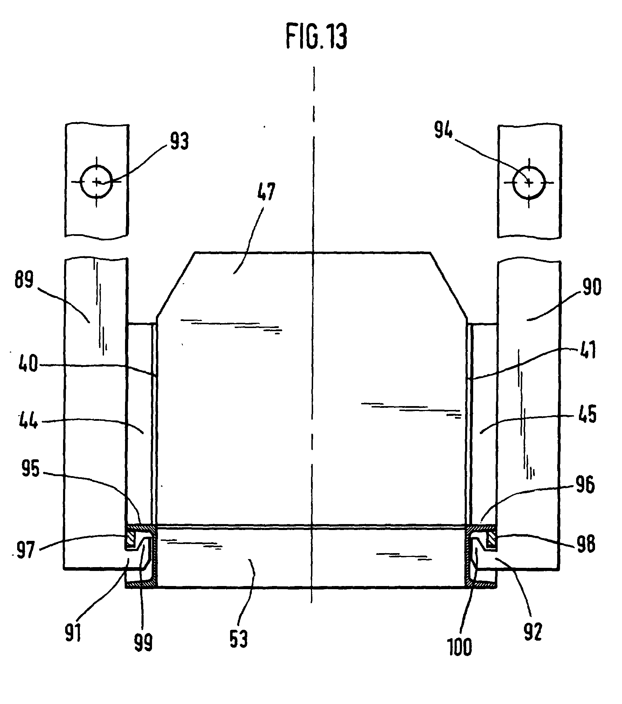

Bei derart gedrehten Lastarmen 89, 90 einerseits, andererseits aber der aus Figur 4 bis 7 ersichtlichen Ausbildung der Joche kann man aber auch ganz auf Vorsprünge nach Art der mit den Ziffern 87, 88 bezeichneten verzichten, wenn nur die Profile 30, 31 so lang ausgebildet werden, daß sie mit den freien Enden der Schenkel 38 bis 41 abschließen, denn dann können wie aus Figur 13 ersichtlich die Lastaufnahmen 91, 92 unter die obenliegenden Schenkel 95, 96 der Profile 30, 31 von außen eingreifen. Zur sicheren Halterung können dabei an den Enden der Schenkel 95, 96 noch Widerlager 97, 98 vorgesehen werden, hinter die die Nasen 99, 100 der Lastaufnahmen 91, 92 einhaken können.

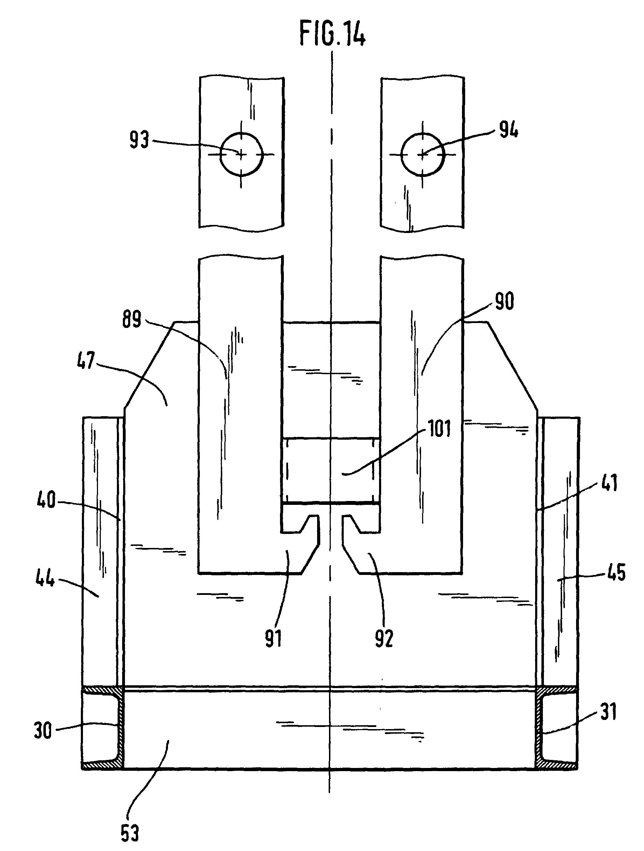

Figur 14 zeigt eine weitere Variationsmöglichkeit in diese Richtung, die dadurch gegeben ist, daß beispielsweise die Vorsprünge 58, 59 bzw. 60, 61 je durch einen entsprechend ausgebildeten, einzigen, etwas breiteren Vorsprung 101 ersetzt sind, der auf der Mitte der Metallplatten 46 und 47 angeordnet ist. Solche Vorsprünge 101 können dann wiederum von in der geschilderten Weise um 180° umgedrehten Lastarm 89, 90 von beiden Seiten aus untergriffen werden.

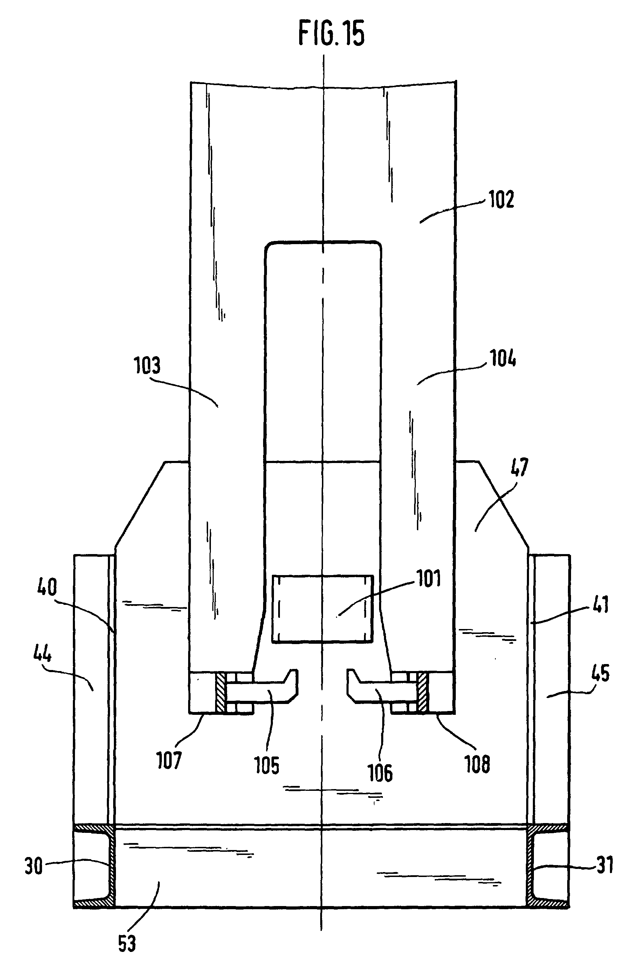

In noch weiterer Abwandlung gemäß Figur 15 können bei dieser Bauform die beiden Lastarme auch durch einen einzigen, an seinem Unterende beispielsweise gabelförmig ausgebildeten Lastarm 102 ersetzt werden, der an seinen durch die Gabel gebildeten beiden Unterenden 103, 104 dann wieder horizontal ein- und ausstellbare Lastaufnahmen 105, 106 trägt, die in der schon aus Figur 11 ersichtlichen Art wieder die Schubstangen von Zylinder-Kolben-Aggregaten 107, 108 sein können.

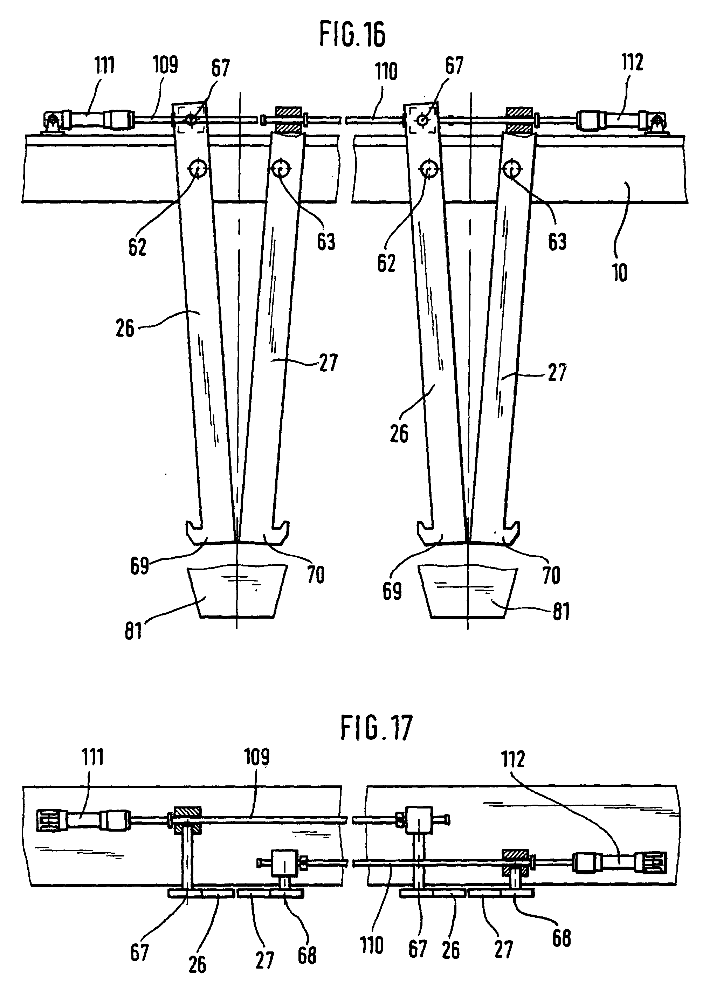

Die Schwenkbarkeit beispielsweise der Lastarme 26, 27 ist anhand der Ausführungsform gemäß Figur 8 durch die dortige Stellvorrichtung 64 gegeben. Anstelle einer solchen Stellvorrichtung kann, wie Figuren 16 und 17 zeigen, auch vorgesehen sein, daß oberhalb des Hubbalkens 10 horizontal verlaufende Schubstangen 109, 110 angeordnet sind, deren eine 110 mit sämtlichen rechten 27 und deren andere 109 mit sämtlichen linken Lastarmen 26 schwenkbar verbunden ist, so daß diese Reihen von rechten und linken Lastarmen durch die Schubstangen mit Hilfe entsprechender, an den Schubstangen angreifender Antriebsmittel beispielsweise in Form hydraulischer Zylinder-Kolben-Aggregate 111, 112, gemeinsam schwenkverstellbar sind.

Die geschilderte Lagervorrichtung bedient sich eines Portalkrans 6. Anstelle eines solchen Portalkrans ist es selbstverständlich auch möglich, eine in einer Halle deckenverfahrbare Hubanlage zu verwenden.

Darüber hinaus ist die beschriebene Lagervorrichtung auf eine einheitliche Breite der Joche quer zur Längsrichtung der Werkstücke abgestellt. Es sind aber auch beispielsweise Joche zweier verschiedener Breiten denkbar, wenn nur dafür gesorgt ist, daß die einem Joch zugeordneten Lastarme entsprechend quer zur Längsrichtung des Lastbalkens gegenseitig verstellbar sind.

Das kann zum Beispiel dadurch geschehen, daß die auf einer Längsseite des Lastbalkens angeordneten Lastarme mit ihren Betätigungsmitteln an einem oder mehreren Schlitten sitzen, die quer zur Längsrichtung des Lastbalkens an diesem verschiebbar und in der jeweils gewünschten Verschiebeposition feststellbar sind.

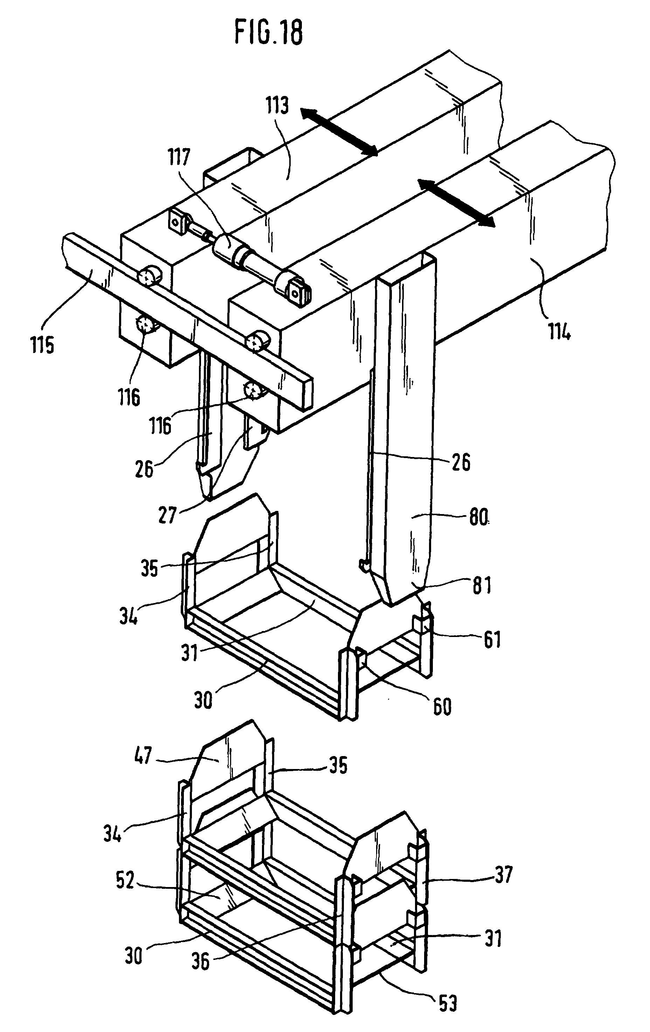

Eine besonders einfache Bauform hierfür zeigt aber Figur 18 in Anlehnung an Figur 3. Daraus ist ersichtlich, daß der Lastbalken 10 gemäß Figur 3 in Längsrichtung vertikal geteilt wurde, so daß Lastbalkenteile 113, 114 entstanden sind. Diese sind stirnseits auf horizontalen Schienen 115 z. B. über Rollen 116 horizontal gegeneinander verstellbar gelagert, wobei dann der gegenseitige Abstand der Lastbalkenteile 113, 114 im Hinblick auf die jeweilige Größe der Joche 3, 4 durch z. B. Zylinder-Kolben-Aggregate 117 eingestellt werden kann, die mit ihren Enden an den Lastbalkenteilen 113, 114 angelenkt sind. Hier sind es dann die Schienen 115, die in geeigneter, an sich bekannter Weise an den Vertikalstützen 7, 8 gemäß Figur 1 und 2 vertikal verfahrbar sind.

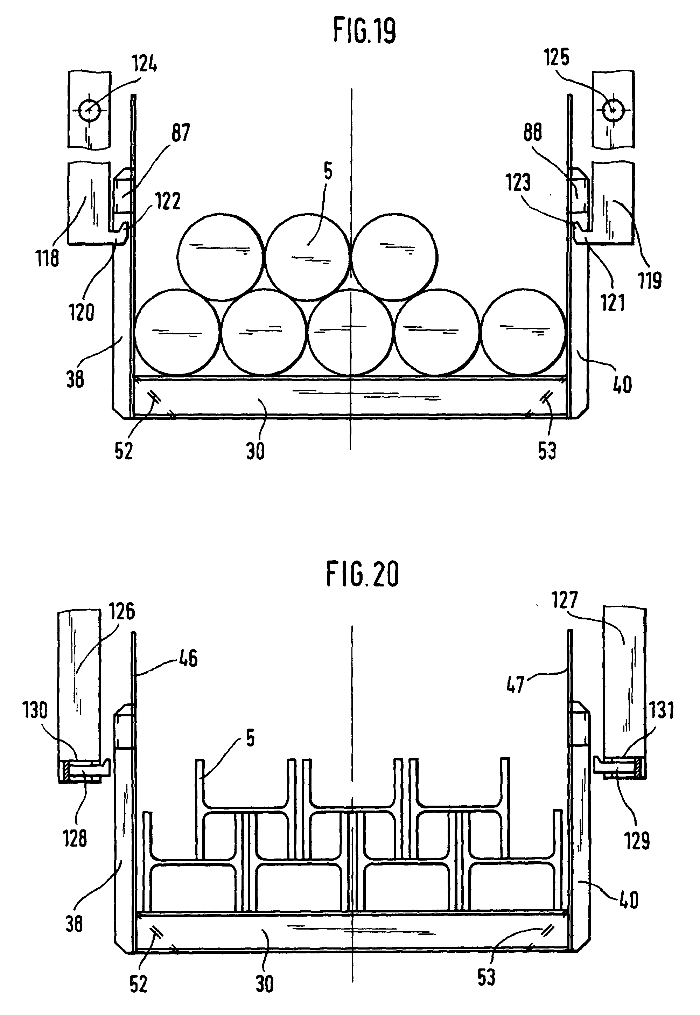

Bei allen bisher geschilderten Bauformen sind die Lastaufnahmen 69, 70, 75 bis 78, 83, 84, 91, 92 sowie 105, 106 parallel zur Längsrichtung der Werkstücke 5 verstellbar. Es besteht jedoch genauso gut die Möglichkeit, solche Lastaufnahmen senkrecht zur Längsrichtung der Werkstücke 5 verstellbar zu gestalten. Beispiele dafür sind in den Figuren 19 und 20 veranschaulicht anhand eines Joches 3, 4, wie es anhand der Figur 12 unter Bezugnahme auf die Figuren 4 bis 6 beschrieben ist.

So zeigt Figur 19 Lastarme 118 und 119, die entsprechend paarweise auf beiden Seiten des Joches vom Lastbalken 10 bzw. den Lastbalkenteilen 113, 114 ausgehend angeordnet sind. Die Lastarme 118, 119 tragen an ihrem unteren Ende sich quer zur Längsrichtung der Werkstücke 5 erstreckende Lastaufnahmen 120, 121, die unter die Vorsprünge 87, 88 bringbar sind, in deren Hohlprofil sie mit endständigen Nasen 122, 123 eingreifen können. Entsprechend sind die Lastarme 118, 119 am Lastbalken 10 bzw. den Lastbalkenteilen 113, 114 um eine zu den Werkstücken parallele Achse 124, 125 schwenkbar mit Hilfe von Betätigungsmitteln der beschriebenenen und hier nicht noch weiter dargestellten Art.

Der Gegenstand gemäß Figur 20 unterscheidet sich von dem gemäß Figur 19 nur dadurch, daß die Lastarmpaare 126, 127 fest am Lastbalken 10 bzw. den Lastbalkenteilen sitzen, während die Horizontalbewegung der Lastaufnahmen 128, 129 quer zur Längserstreckung der Werkstükke 5 dadurch geschieht, daß diese Lastaufnahmen wieder durch die Schubstangen von Zylinder-Kolben-Aggregaten 130, 131 gebildet sind, die am unteren Ente der Lastarme 126, 127 sitzen.

Für die Bauformen nach Figur 19 und 20 können die Lastarmpaare ebenfalls wieder durch einzelne Lastarme ersetzt werden, wenn nur die Joche mit Einzelvorsprüngen 101 gemäß Figur 14 versehen, oder eine der Bauform gemäß Figur 11 entsprechende Bauform gewählt wird.

Im übrigen gelten die Schilderungen zu den Figuren 1 bis 18 sinngemäß auch für die Bauformen nach den Figuren 19 und 20.

## Patentansprüche

1. Vorrichtung zum Lagern und Transportieren von langen Werkstücken (5) bestehend aus mindestens zwei oberhalb der Werkstücke offenen Jochen (3, 4), in denen die Werkstücke auf einem im wesentlichen horizontalen, sich quer zur Längsrichtung der Werkstücke erstreckenden Bodenteil (30, 31) und zwischen zwei damit verbundenen, im wesentlichen vertikalen Seitenteilen (32, 33) aufgenommen sind, wobei die Joche aufeinander stapelbar ausgebildet sind, die Seitenteile Mittel (60, 61) aufweisen, die von Lastaufnahmen (69, 70) einer Hubanlage (6) zum Anheben und Versetzen der Joche untergriffen werden, und die Lastaufnahmen zwischen einer Position horizontal neben den untergreifbaren Mitteln und einer Position unterhalb dieser verstellbar sind und sich an wenigstens einem sich im wesentlichen senkrecht nach unten erstreckenden Lastarm (26, 27, 73, 74, 82, 89, 90, 102, 118, 119, 126, 127) befinden,
**dadurch gekennzeichnet,**
**dass** die Mittel für den Eingriff der Lastaufnahmen (69, 70, 75 bis 78, 83, 84, 91, 92, 105, 106, 120, 121, 128, 129) durch wenigstens einen Vorsprung (58 bis 61, 87, 88, 95, 96, 101) auf der Außenseite jedes Seitenteiles (32, 33) gebildet sind und dass die Hubanlage (6) jedem Seitenteil (32, 33) jedes Joches (3, 4) zugeordnet zwei Lastaufnahmen aufweist.

2. Vorrichtung nach Anspruch 1,
**dadurch gekennzeichnet,**
**daß** die Lastaufnahmen (120, 121, 128, 129) quer zur Längsrichtung der Werkstücke (5) verstellbar sind.

3. Vorrichtung nach Anspruch 1,
**dadurch gekennzeichnet,**
**daß** die Lastaufnahmen (69, 70, 75 bis 78, 83, 84, 19, 92, 105, 106) parallel zur Längsrichtung der Werkstücke (5) verstellbar sind.

4. Vorrichtung nach einem oder mehreren der Ansprüche 1 bis 3,
**dadurch gekennzeichnet,**
**daß** jedes Seitenteil (32, 33) zwei in Horizontalrichtung nebeneinander angeordnete Vorsprünge (58 bis 61, 87 88, 95, 96) aufweist.

5. Vorrichtung nach Anspruch 4,
**dadurch gekennzeichnet,**
**daß** die Vorsprünge (58 bis 61, 87, 88, 95, 96) in gleicher Höhenlage angeordnet sind.

6. Vorrichtung nach einem oder mehreren der Ansprüche 1 bis 5,
**dadurch gekennzeichnet,**
**daß** die Seitenteile (32, 33) je durch wenigstens zwei sie in Längsrichtung der Werkstücke (5) begrenzende, sich im wesentlichen vertikal erstreckende Profilstäbe (34 bis 37) aus Metall gebildet sind, und daß das Bodenteil wenigstens zwei sich im wesentlichen horizontal quer zur Längsrichtung der Werkstücke (5) erstreckende Profilstäbe (30, 31) aus Metall aufweist, wobei die Enden jedes dieser Profilstäbe (30, 31) mit den unteren Enden eines Paares sich quer zur Längsrichtung der Werkstücke (5) einander gegenüberstehender, vertikaler Profilstäbe (34, 36 bzw. 35, 37) verbunden sind.

7. Vorrichtung nach Anspruch 6,
**dadurch gekennzeichnet,**
**daß** die vertikalen Profilstäbe (34 bis 37) L-förmigen Materialquerschnitt aufweisen und derart angeordnet sind, daß einer der L-Schenkel (38 bis 41) von den Werkstücken (5) fort und die anderen L-Schenkel (42 bis 45) von auf einer Seite der Werkstücke (5) benachbarten Profilstäben (34, 35 bzw. 36, 37) voneinander fort gerichtet sind.

8. Vorrichtung nach einem der Ansprüche 6 oder 7,
**dadurch gekennzeichnet,**
**daß** die horizontalen Profilstäbe (30, 31) U-förmigen oder rohrförmigen Materialquerschnitt aufweisen.

9. Vorrichtung nach Anspruch 8,
**dadurch gekennzeichnet,**
**daß** bei horizontalen Profilstäben (30, 31) mit U-förmigem Querschnitt diese derart angeordnet sind, daß die Öffnungen der Profilquerschnitte in zueinander parallele oder voneinander fort entgegengesetzte Richtungen weisen.

10. Vorrichtung nach einem oder mehreren der Ansprüche 6 bis 9,
**dadurch gekennzeichnet,**
**daß** die den jeweiligen Seitenteilen zugeordneten vertikalen Profilstäbe (34, 35 bzw. 36, 37) im Bereich der oberen Hälfte ihrer Längserstreckung durch eine zwischengesetzte, in einer im wesentlichen vertikalen Ebene gelegene Metallplatte (46, 47) miteinander verbunden sind.

11. Vorrichtung nach Anspruch 10,
**dadurch gekennzeichnet,**
**daß** die den Werkstücken (5) zugewandten vertikalen Oberflächen der Metallplatten (46, 47) in einer Ebene mit den den Werkstücken (5) zugewandten Oberflächen der vertikalen Profilstäbe (34 bis 37) angeordnet sind.

12. Vorrichtung nach einem der Ansprüche 10 oder 11,
**dadurch gekennzeichnet,**
**daß** die quer zur Längsrichtung der Werkstücke (5) gelegene horizontale Dicke der Metallplatten (46, 47) geringer als die des Profilquerschnittes der vertikalen Profilstäbe (34 bis 37) in der gleichen Richtung ist.

13. Vorrichtung nach einem oder mehreren der Ansprüche 6 bis 12,
**dadurch gekennzeichnet,**
**daß** zwischen den in Längsrichtung der Werkstücke (5) nebeneinanderliegenden Enden der horizontalen Profilstäbe (30, 31) und innerhalb des von den Werkstücken (5) eingenommenen vertikalen Querschnittsbereiches je ein zur Werkstücklängsrichtung paralleles Metallblech (52, 53) befestigt ist, dessen Ober- (54, 55) und Unterkante (56, 57) innerhalb des Höhenbereiches liegen, der durch die Vertikalerstreckung des Querschnittes der Profilstäbe (30, 31) gebildet ist.

14. Vorrichtung nach einem oder mehreren der Ansprüche 10 bis 13,
**dadurch gekennzeichnet,**
**daß** die Metallplatten (46, 47) eine die Oberenden der zugeordneten Profilstäbe (34, 35 bzw. 36, 37) überragende Höhe aufweisen.

15. Vorrichtung nach Anspruch 14,
**dadurch gekennzeichnet,**
**daß** die beiden Seitenkanten des die Profilstäbe (34 bis 37) überragenden Teils der Metallplatten (46, 47) zur Oberkante der Metallplatten (46, 47) hin aufeinander zu verlaufende Abschrägungen (48 bis 51) aufweisen.

16. Vorrichtung nach einem oder mehreren der Ansprüche 13 bis 15,
**dadurch gekennzeichnet,**
**daß** die einem Paar von horizontalen Profilstäben (30, 31) beidenendes zugeordneten Metallbleche (52, 53) bezüglich ihrer Oberkanten (54, 55) einen größeren gegenseitigen Abstand aufweisen als bezüglich ihrer Unterkanten (56, 57).

17. Vorrichtung nach einem oder mehreren der Ansprüche 10 bis 16,
**dadurch gekennzeichnet,**
**daß** bei Ausstattung der Seitenteile mit einem Vorsprung dieser etwa horizontal mittig auf der werkstückabgewandten Seite der Metallplatten (46, 47) angeordnet ist.

18. Vorrichtung nach einem oder mehreren der Ansprüche 10 bis 16,
**dadurch gekennzeichnet,**
**daß** bei Ausstattung der Seitenteile (32, 33) mit zwei Vorsprüngen (58, 59 bzw. 60, 61) diese auf der werkstückabgewandten Seite der Metallplatten (46, 47) je im Stoßwinkel zwischen vertikalem Profilstab (34 bis 37) und Metallplatte (46, 47) angeordnet sind.

19. Vorrichtung nach einem oder mehreren der Ansprüche 6 bis 16,
**dadurch gekennzeichnet,**
**daß** bei Ausstattung der Seitenteile (32, 33) mit zwei Vorsprüngen (87, 88) diese an den voneinander fort gerichteten Seiten der einem Seitenteil (32, 33) zugeordneten vertikalen Profilstäbe (34 bis 37) angeordnet sind.

20. Vorrichtung nach Anspruch 19,
**dadurch gekennzeichnet**
**daß** die Vorsprünge (87, 88) im Bereich der oberen Hälfte der Längserstreckung der Profilstäbe (34 bis 37) sitzen.

21. Vorrichtung nach einem oder mehreren der Ansprüche 1 bis 20,
**dadurch gekennzeichnet,**
**daß** die Vorsprünge (58 bis 61, 87, 88, 101) der Seitenteile (32, 33) einen in Vertikalrichtung offenen Hohlquerschnitt aufweisen.

22. Vorrichtung nach einem oder mehreren der Ansprüche 1 bis 21,
**dadurch gekennzeichnet,**
**daß** die freien, mit den Vorsprüngen (58 bis 61, 87, 88, 101) in Eingriff gelangenden Enden der Lastaufnahmen (69, 70, 75 bis 78, 83, 84, 91, 92, 105, 106, 120, 121, 128, 129) mit einer nach oben vorstehenden Nase (71, 72, 99, 100, 122, 123) versehen sind.

23. Vorrichtung nach einem oder mehreren der Ansprüche 6 bis 22,
**dadurch gekennzeichnet,**
**daß** bei Ausstattung der Seitenteile (32, 33) mit zwei Vorsprüngen sich die horizontalen Profilstäbe (30, 31) bis zur vertikalen Außenseite der Seitenteile (32, 33) erstrecken und als U-förmig profilierte Profilstäbe (30, 31) mit voneinander fort gerichteten Profilöffnungen ausgebildet sind, und daß die oberen Profilschenkel (96, 96) der Profilstäbe (30, 31) die Vorsprünge bilden.

24. Vorrichtung nach einem oder mehreren der Ansprüche 1 bis 23,
**dadurch gekennzeichnet,**
**daß** die Hubanlage (6) einen sich im wesentlichen über den Längenbereich der Werkstücke (5) erstreckenden, höhenverfahrbaren Hubbalken (10, 113, 114) aufweist, und daß an den Seiten des Hubbalkens die den Seitenteilen (34 bis 37, 46, 47) der Joche (3, 4) zugeordneten, sich vom Hubbalken in der Vertikalebene der zugehörigen Vorsprünge (58 bis 61) nach unten erstreckenden Lastarme (26, 27, 73, 74, 82, 89, 90, 102, 118, 119, 126, 127i) befestigt sind.

25. Vorrichtung nach einem oder mehreren der Ansprüche 1 bis 24,
**dadurch gekennzeichnet,**
**daß** bei einem für jedes Seitenteil (34 bis 37, 46, 47) vorgesehenen Lastarm (82, 102, 126, 127) die Lastarme an ihren Unterenden je zwei in Horizontalrichtung zwischen einer ausgefahrenen und einer eingezonenen Position verstellbare Lastaufnahmen (83, 84, 105, 106, 128, 129) aufweisen.

26. Vorrichtung nach einem oder mehreren der Ansprüche 1 bis 24,
**dadurch gekennzeichnet,**
**daß** für jedes Seitenteil (32, 33) zwei in einer gemeinsamen, zu den Seitenteilen parallelen Ebene gelegene Lastarme (26, 27, 73, 74, 89, 90) vorgesehen sind, daß die Lastarme (26, 27, 73, 74, 89, 90) am Hubbalken (10, 113, 114) je um eine horizontale, sich quer zur Längsrichtung der Werkstücke (5) erstreckende Achse (62, 63, 93, 94) schwenkbar gelagert und mit Mitteln (64 bis 66, 109, 112) zur Schwenkbetätigung verbunden sind und daß die Lastarme an ihren Unterenden horizontal in Richtung auf den zugeordneten Vorsprung (58 bis 61, 87, 88) vorstehend eine Lastaufnahme (69, 70, 75 bis 78, 91, 92) aufweisen.

27. Vorrichtung nach einem oder mehreren der Ansprüche 1 bis 24,
**dadurch gekennzeichnet,**
**daß** für jedes Seitenteil (32, 33) zwei in Längsrichtung der Werkstücke (5) nebeneinander angeordnete Lastarme (118, 119) vorgesehen sind, daß die Lastarme (118, 119) am Hubbalken (10, 113, 114) je um eine horizontal, sich parallel zur Längsrichtung der Werkstücke (5) erstrekkende Achse (124, 125) schwenkbar gelagert und mit Mitteln zur Schwenkbetätigung verbunden sind, und daß die Lastarme (118, 119) an ihren Unterenden horizontal in Richtung auf den zugeordneten Vorsprung (58 bis 61, 87, 88) vorstehend eine Lastaufnahme (120, 121) aufweisen.

28. Vorrichtung nach einem oder mehreren der Ansprüche 1 bis 27,
**dadurch gekennzeichnet,**
**daß** die Lastarme (26, 27, 73, 74, 82, 89, 90, 102, 118, 119, 126, 127) oberhalb der Lastaufnahmen (69, 70, 83, 84, 91, 92, 105, 106, 120, 121, 128, 129) eine die Höhe wenigstens zweier aufeinanderstehender Joche (3, 4) überbrückende freie Länge aufweisen.

29. Vorrichtung nach einem oder mehreren der Ansprüche 1 bis 28,
**dadurch gekennzeichnet**,
die Lastarme (73, 74) übereinander mehrere Lastaufnahmen (75 bis 78) für die Vorsprünge (58 bis 61) aufeinanderstehender Joche (3, 4) aufweisen.

30. Vorrichtung nach Anspruch 29,
**dadurch gekennzeichnet,**
**daß** der gegenseitige Abstand übereinander angeordneter Lastaufnahmen (75, 77 bzw. 76, 78) eines Lastarmes (73 bzw. 74) wenigstens geringfügig größer als der gegenseitige Abstand der Vorsprünge (58 bis 61) aufeinandergesetzter Joche (3, 4) ist.

31. Vorrichtung nach einem oder mehreren der Ansprüche 1 bis 30,
**dadurch gekennzeichnet,**
**daß** die Hubanlage (6) in Portalbauweise ausgeführt ist mit außerhalb der Enden der Werkstücke (5) quer zu deren Längserstreckung verfahrbaren Vertikalstützen (7, 8) und wenigstens einem deren Oberenden miteinander verbindenden, sich zu den Werkstücken (5) parallel erstreckenden Längsträger (9), und daß der Lastbalken (10, 113, 114) mit seinen Enden an den Vertikalstützen (7, 8) geführt vertikal verfahrbar ist.

32. Vorrichtung nach Anspruch 31,
**dadurch gekennzeichnet,**
**daß** die Vertikalstützen (7, 8) der Hubanlage (6) quer zur Längserstreckung der Werkstücke (5) bodenverfahrbar sind.

33. Vorrichtung nach einem oder mehreren der Ansprüche 1 bis 32,
**dadurch gekennzeichnet,**
**daß** der quer zur Längsrichtung der Werkstücke (5) gegebene Abstand der einem Joch (3, 4) zugeordneten Lastarme (26, 27, 73, 74, 82, 89, 90, 102, 118, 119, 126, 127) im Hinblick auf unterschiedliche Jochbreiten verstellbar ausgebildet ist.

34. Vorrichtung nach Anspruch 33,
**dadurch gekennzeichnet,**
**daß** der Lastbalken aus zwei zu den Werktstücken (5) parallelen, horizontal nebeneinander angeordneten Lastbalkenteilen (113, 114) besteht, daß jeder Lastbalkenteil die einer Seite der Joche (3, 4) zugeordneten Lastarme (26, 27, 73, 74, 82, 89, 90, 102, 118, 119, 126, 127) trägt, und daß der gegenseitige horizontale Abstand der Lastbalkenteile (113, 114) verstellbar ist.

## Claims

1. Apparatus for storing and transporting long workpieces (5) comprising at least two yokes (3, 4), which are open above the workpieces and in which the workpieces are received on a substantially horizontal base portion (30, 31) extending transversely to the longitudinal direction of the workpieces and between two substantially vertical side portions (32, 33) connected thereto, whereby the yokes are stackable on one another, the side portions have means (60, 61), beneath which engage load lifters (69, 70) of a lifting installation (6) for lifting and shifting the yokes, and the load lifters are movable between a position horizontally adjacent the engageable means and a position below them and are located on at least one substantially vertically downwardly extending load arm (26, 27, 73, 74, 82, 89, 90, 102, 118, 119, 126, 127) **characterised in that** the means for engaging te load lifters (69, 70, 75 to 78, 83, 84, 91, 92, 105, 106, 120, 121, 128, 129) are constituted by at least one projection (58 to 61, 87, 88, 95, 96, 101) on the outer surface of each side portion (32, 33) and that the lifting installation (6) has two load lifters associated with each side portion (32, 33) of each yoke (3, 4),

2. Apparatus as claimed in Claim 1, **characterised in that** the load lifters (120, 121, 128, 129) are movable transversely to the longitudinal direction of the workpieces (5).

3. Apparatus as claimed in Claim 1, **characterised in that** the load lifters (69, 70, 75 to 78, 83, 84, 19, 92, 105, 106) are movable parallel to the longitudinal direction of the workpieces (5).

4. Apparatus as claimed in one or more of Claims 1 to 3, **characterised in that** each side portion (32, 33) has two projections (58 to 61, 87, 88, 95, 96) arranged adjacent one another in the horizontal direction.

5. Apparatus as claimed in Claim 4, **characterised in that** the projections (58 to 61, 87, 88, 95, 96) are arranged at the same height.

6. Apparatus as claimed in one or more of Claims 1 to 5, **characterised in that** the side portions (32, 33) are constituted by at least two metallic profiled bars (34 to 37), which limit them in the longitudinal direction of the workpieces (5) and extend substantially vertically and that the base portion has at least two metallic profiled bars (30, 31), which extend substantially horizontally and transverse to the longitudinal direction of the workpieces (5), whereby the ends of each of these profiled bars (30, 31) are connected to the lower ends of a pair of vertical profiled bars (34, 36 and 35, 37, respectively) which are opposed to one another transverse to the longitudinal direction of the workpieces (5).

7. , Apparatus as claimed in Claim 6, **characterised in that** the vertical profiled bars (34 to 37) have an L shaped material cross-section and are so arranged that one of the L limbs (38 to 41) is directed away from the workpieces (5) and the other L limbs (42 to 45) of adjacent profiled bars (34, 35 and 36, 37, respectively) on one side of the workpieces (5) are directed away from one another.

8. Apparatus as claimed in one of Claims 6 or 7, **characterised in that** the horizontal profiled bars (30, 31) have a U shaped or tubular material cross-section.

9. Apparatus as claimed in Claim 8, **characterised in that** in the case of horizontal profiled bars (30, 31) with a U shaped cross-section, they are so arranged that the openings of the profile cross-sections are directed in directions which are parallel to one another or opposed away from one another.

10. Apparatus as claimed in one or more of Claims 6 to 9, **characterised in that** the vertical profiled bars (34, 35 and 36, 37) associated with the respective side portions are connected together in the region of their upper half of their length by an interposed metal plate (46, 47) situated in a substantially vertical plane.

11. Apparatus as claimed in Claim 10, **characterised in that** the vertical surfaces of the metal plates (46, 47) directed towards the workpieces (5) are arranged in a plane with the surfaces of the vertical profiled bars (34 to 37) directed towards the workpieces (5).

12. Apparatus as claimed in one of Claims 10 or 11, **characterised in that** the horizontal thickness of the metal plates (46, 47) extending transverse to the longitudinal direction of the workpieces (5) is less than that of the profile cross-section of the vertical profiled bars (34 to 37) in the same direction.

13. Apparatus as claimed in one or more of Claims 6 to 12, **characterised in that** between the adjacent ends in the longitudinal direction of the workpieces (5) of the horizontal profiled bars (30, 31) and within the vertical cross-sectional region taken up by the workpieces (5) a respective metal plate (52, 53) parallel to the longitudinal direction of the workpieces is secured, the upper edge (54, 55) and lower edge (56, 57) of which are situated within the height range which is defined by the vertical extent of the cross-section of the profiled bars (30, 31).

14. Apparatus as claimed in one or more of Claims 10 to 13, **characterised in that** the metal plates (46, 47) have a height which projects above the upper ends of the associated metal bars (34, 35 and 36, 37, respectively).

15. Apparatus as claimed in Claim 14, **characterised in that** the two side edges of the portion of the metal plates (46, 47) which projects above the profiled bars (34 to 37) have bevels (48 to 51) extending towards one another and towards the upper edge of the metal plates (46, 47).

16. Apparatus as claimed in one or more of Claims 13 to 15, **characterised in that** the metal plates (52, 53) associated with one pair of horizorital profiled bars (30, 31) at both ends have a greater mutual spacing with respect to their upper edges (54, 55) than with respect to their lower edges (56, 57).

17. Apparatus as claimed in one or more of Claims 10 to 16, **characterised in that** when the side portions are provided with a projection, the latter is disposed approximately horizontally and centrally on the side of the metal plates (46, 47) remote from the workpieces.

18. Apparatus as claimed in one or more of Claims 10 to 16, **characterised in that** when the side portions (32, 33) are provided with two projections (58, 59 and 60, 61), the latter are arranged on the side of the metal plates (46, 47) remote from the workpieces at a butting angle between the vertical profiled bar (34 to 37) and metal plate (46, 47).

19. Apparatus as claimed in one or more of Claims 6 to 16, **characterised in that** when the side portions (32, 33) are provided with two projections (87, 88), the latter are arranged on the surfaces directed away from one another of the vertical profiled bars (34 to 37) associated with one side portion (32, 33).

20. Apparatus as claimed in Claim 19, **characterised in that** the projections (87, 88) are situated in the region of the upper half of the length of the profiled bars (34 to 37).

21. Apparatus as claimed in one or more of Claims 1 to 20, **characterised in that** the projections (58 to 61, 87, 88, 101) on the side portions (32, 33) have a hollow cross-section which is open in the vertical direction.

22. Apparatus as claimed in one or more of Claims 1 to 21, **characterised in that** the free ends of the load lifters (69, 70, 75 to 78, 83, 84, 91, 92, 105, 106, 120, 121, 128, 129), which come into engagement with the projections (58 to 61, 87, 88, 101) are provided with an upwardly projecting nose (71, 72, 99, 100, 122, 123).

23. Apparatus as claimed in one or more of Claims 6 to 22, **characterised in that** when the side portions (32, 33) are provided with two projections, the horizontal profiled bars (30, 31) extend to the vertical outer surface of the side portions (32, 33) and are constructed in the form of U shaped profiled bars (30, 31) with profile openings directed away from one another and that the upper profile limbs (96, 96) of the profiled bars (30, 31) constitute the projections.

24. Apparatus as claimed in one or more of Claims 1 to 23, **characterised in that** the lifting installation (6) has a vertically movable lifting beam (10, 113, 114), which extends substantially over the length region of the workpieces (5) and that secured to the sides of the lifting beam are the load arms (26, 27, 73, 74, 82, 89, 90, 102, 118, 119, 126, 127), which are associated with the side portions (34 to 37, 46, 47) of the yokes (3, 4) and extend downwardly from the lifting beam in the vertical plane of the associated projections (58 to 61).

25. Apparatus as claimed in one or more of Claims 1 to 24, **characterised in that** with one load arm (82, 102, 126, 127) provided for each side portion (34 to 37, 46, 47) the load arms each have, at their lower ends, two load lifters (83, 84, 105, 106, 128, 129), which are movable in the horizontal direction between an extended and a retracted position.

26. Apparatus as claimed in one or more of Claims 1 to 24, **characterised in that** for each side portion (32, 33) two load arms (26, 27, 73, 74, 89, 90) are provided situated in a common plane parallel to the side portion, that the load arms (26, 27, 73, 74, 89, 90) are mounted pivotally on the lifting beam (10, 113, 114) about a respective horizontal axis (62, 63, 93, 94), extending transverse to the longitudinal direction of the workpieces (5), and are connected to means (64 to 66, 109, 112) for pivotal actuation and that at their lower end the load arms have a load lifter (69, 70, 75 to 78, 91, 92) projecting horizontally in the direction towards the associated projection (58 to 61, 87, 88).

27. Apparatus as claimed in one or more of Claims 1 to 24, **characterised in that** for each side portion two load arms (118, 119) are provided arranged next to one another in the longitudinal direction of the workpieces (5), that the load arms (118, 119) are mounted pivotally on the lifting beam (10, 113, 114) about a respective horizontal axis (124, 125) extending parallel to the longitudinal direction of the workpieces (5) and are connected to means for pivotal actuation and that at their lower ends the load arms (118, 119) have a load lifter (120, 121) projecting horizontally in the direction towards the associated projection (58 to 61, 87, 88).

28. , Apparatus as claimed in one or more of Claims 1 to 27, **characterised in that** the load arms (26, 27, 73, 74, 82, 89, 90, 102, 118, 119, 126, 127) have a free length above the load lifters (69, 70, 83, 84, 91, 92, 105, 106, 120, 121, 128, 129), which bridges the height of at least two yokes (3, 4) resting on one another.

29. Apparatus as claimed in one or more of Claims 1 to 28, **characterised in that** the load arms (73, 74) have a plurality of load lifters (75 to 78) above one another for the projections (58 to 61) on yokes (3, 4) resting on one another.

30. Apparatus as claimed in Claim 29, **characterised in that** the mutual spacing of load lifters (75, 77 and 76, 78), arranged above one another, on a load arm (73 and 74, respectively), is at least slightly larger than the mutual spacing of the projections (58 to 61) on yokes (3, 4) positioned on one another.

31. , Apparatus as claimed in one or more of Claims 1 to 30, **characterised in that** the lifting installation (6) is of portal construction with vertical supports (7, 8) movable outside the ends of the workpieces (5) transverse to their length and at least one longitudinal carrier connecting their upper ends together and extending parallel to the workpieces (5) and that the ends of the load beam (10, 113, 114) are guided on the vertical supports (7, 8) to be vertically movable.

32. Apparatus as claimed in Claim 31, **characterised in that** the vertical supports (7, 8) of the lifting installation (6) are movable on the ground transverse to the length of the workpieces (5).

33. Apparatus as claimed in one or more of Claims 1 to 32, **characterised in that** the spacing transverse to the longitudinal direction of the workpieces (5) of the load arm (26, 27, 73, 74, 82, 89, 90, 102, 118, 119, 126, 127) associated with one yoke (3, 4) is adjustable to accommodate different yoke breadths.

34. Apparatus as claimed in Claim 33, **characterised in that** the load beam comprises two components load beams (113, 114) arranged horizontally next to one another and parallel to the workpieces (5), that each component load beam carries the load arms (26, 27, 73, 74, 82, 89, 90, 102, 118, 119, 126, 127) associated with one side of the yokes (3, 4) and that the mutual horizontal spacing of the component load beams (113, 114) is adjustable.

## Revendications

1. Dispositif de stockage et de transport de pièces longues (5), composé au moins de deux travées (3, 4) ouvertes au-dessus des pièces, dans lesquelles travées les pièces sont recueillies sur une pièce de fond (30, 31), principalement horizontale et s'étendant perpendiculairement au sens longitudinal des pièces, et entre deux parties latérales (32, 33) qui y sont raccordées, principalement verticales, les travées étant formées pour être empilables l'une sur l'autre, les parties latérales présentant des moyens (60, 61) saisis par en-dessous par des dispositifs d'accrochage de charge (69, 70) d'un dispositif de levage (6) pour soulever et déplacer les travées, les dispositifs d'accrochage de charge étant réglables entre une position horizontale à côté des moyens pouvant être pris en-dessous et une position en-dessous de celle-ci, et se trouvant sur au moins un bras de puissance (26, 27, 73, 74, 82, 89, 90, 102, 118, 119, 126, 127) essentiellement vertical et s'étendant vers le bas, **caractérisé en ce que** les moyens pour saisir les dispositifs d'accrochage de charge (69, 70, 75 à 78, 83, 84, 91, 92, 105, 106, 120, 121, 128, 129) sont formés par au moins une avancée (58 à 61, 87, 88, 95, 96, 101). sur le côté extérieur de chaque partie latérale (32, 33) et **en ce que** le dispositif de levage (6) présente deux dispositifs d'accrochage de charge attribués à chaque partie latérale (32, 33) de chaque travée (3, 4).

2. Dispositif selon la revendication 1, **caractérisé en ce que** les dispositifs d'accrochage de charge (120, 121, 128, 129) sont réglables transversalement par rapport au sens longitudinal des pièces (5).

3. Dispositif selon la revendication 1, **caractérisé en ce que** les dispositifs d'accrochage de charge (69, 70, 75 à 78, 83, 84, 91, 92, 105, 106) sont réglables parallèlement au sens longitudinal des pièces (5).

4. Dispositif selon l'une ou plusieurs des revendications 1 à 3, **caractérisé en ce que** chaque partie latérale (32, 33) présente deux avancées (58 à 61, 87, 88, 95, 96) placées l'une à côté de l'autre en sens horizontal.

5. Dispositif selon la revendication 4, **caractérisé en ce que** les avancées (58 à 61, 87, 88, 95, 96) sont placées à la même hauteur.

6. Dispositif selon l'une ou plusieurs des revendications 1 à 5, **caractérisé en ce que** les parties latérales (32, 33) sont formées chacune par au moins deux barres profilées (34 à 37) en métal les limitant dans le sens longitudinal des pièces (5) et s'étendant essentiellement verticalement, et **en ce que** la pièce de fond présente au moins deux barres profilées (30, 31) en métal s'étendant essentiellement horizontalement et perpendiculairement au sens longitudinal des pièces (5), les extrémités de chacune de ces barres profilées (30, 31) étant raccordées aux extrémités inférieures d'une paire de barres profilées (34, 36 ou 35, 37) verticales opposées l'une à l'autre perpendiculairement par rapport au sens longitudinal des pièces (5).

7. Dispositif selon la revendication 6, **caractérisé en ce que** les barres profilées verticales (34 à 37) présentent des sections de matériau en L et sont placées de telle façon que l'un des côtés en L (38 à 41) est détourné des pièces (5) et les autres côtés en L (42 à 45) sont détournés les uns des autres de barres profilées (34, 35 ou 36, 37) adjacentes sur un côté des pièces (5).

8. Dispositif selon l'une des revendications 6 ou 7, **caractérisé en ce que** les barres profilées (30, 31) horizontales présentent une section de matériau en forme de U ou en forme de tube.

9. Dispositif selon la revendication 8, **caractérisé en ce que,** dans le cas de barres profilées horizontales (30, 31) à section en forme de U, celles-ci sont placées de telle sorte que les ouvertures des sections profilées présentent des directions parallèles ou opposées les une aux autres.

10. Dispositif selon l'une ou plusieurs des revendications 6 à 9, **caractérisé en ce que** les barres profilées verticales (34, 35 ou 36, 37) attribuées aux parties latérales respectives dans la partie de la moitié supérieure de leur prolongement longitudinal sont raccordées entre elles par une plaque métallique (46, 47) intermédiaire, installée dans un niveau essentiellement vertical.

11. Dispositif selon la revendication 10, **caractérisé en ce que** les surfaces verticales des plaques métalliques (46, 47) tournées vers les pièces (5) sont placées au même niveau que les surfaces des barres profilées verticales (34 à 37) tournées vers les pièces (5).

12. Dispositif selon l'une des revendications 10 ou 11, **caractérisé en ce que** l'épaisseur horizontale des plaques métalliques (46, 47) perpendiculaire par rapport au sens longitudinal des pièces (5) est inférieure à celle de la section profilée des barres profilées (34 à 37) verticales dans la même direction.

13. Dispositif selon l'une ou plusieurs des revendications 6 à 12, **caractérisé en ce qu'**une tôle métallique (52, 53), parallèle au sens longitudinal des pièces, est fixée entre les extrémités adjacentes du sens longitudinal des pièces (5) des barres profilées horizontales (30, 31) et à l'intérieur de la partie de la section verticale prise par les pièces (5), dont l'arête supérieure (54, 55) et l'arête inférieure (56, 57) sont situées à l'intérieur de la hauteur formée par le prolongement vertical de la section de barres profilées (30, 31).

14. Dispositif selon l'une ou plusieurs des revendications 10 à 13, **caractérisé en ce que** les plaques métalliques (46, 47) présentent une hauteur dépassant les extrémités supérieures des barres profilées (34, 35 et 36, 37) correspondantes.

15. Dispositif selon la revendication 14, **caractérisé en ce que** les deux arêtes latérales de la partie des plaques métalliques (46, 47) dépassant des barres profilées (34 à 37) présentent des inclinaisons (48 à 51) se rejoignant vers l'arête supérieure des plaques métalliques (46, 47).

16. Dispositif selon l'une ou plusieurs des revendications 13 à 15, **caractérisé en ce que** les tôles métalliques (52, 53) attribuées aux deux extrémités d'une paire de barres profilées (30, 31) horizontales présentent, par rapport à leurs arêtes supérieures (54, 55), un écart mutuel plus grand par rapport à leurs arêtes inférieures (56, 57).

17. Dispositif selon l'une ou plusieurs des revendications 10 à 16, **caractérisé en ce que,** dans le cas de l'équipement des parties latérales avec une avancée, celle-ci est placée à peu près horizontalement et au centre sur le côté des plaques métalliques (46, 47) détourné des pièces.

18. Dispositif selon l'une ou plusieurs des revendications 10 à 16, **caractérisé en ce que,** dans le cas de l'équipement des parties latérales (32, 33) avec deux avancées (58, 59 et 60, 31), celles-ci sont placées sur le côté des plaques métalliques (46, 47) détourné des pièces, respectivement dans l'angle de butée entre la barre profilée verticale (34 à 37) et la plaque métallique (46, 47).

19. Dispositif selon l'une ou plusieurs des revendications 6 à 16, **caractérisé en ce que,** dans le cas de l'équipement des parties latérales (32, 33) avec deux avancées (87, 88), celles-ci sont placées sur les côtés détournés les uns dès autres des barres profilées (34 à 37) verticales correspondant à une partie latérale (32, 33).

20. Dispositif selon la revendication 19, **caractérisé en ce que** les avancées (87, 88) se trouvent dans la partie de la moitié supérieure du prolongement longitudinal des barres profilées (34 à 37).

21. Dispositif selon l'une ou plusieurs des revendications 1 à 20, **caractérisé en ce que** les avancées (58 à 61, 87, 88, 101) des parties latérales (32, 33) présentent une section creuse ouverte en sens vertical.

22. Dispositif selon l'une ou plusieurs des revendications 1 à 21, **caractérisé en ce que** les extrémités libres des dispositifs d'accrochage de charge (69, 70, 75 à 78, 83, 84, 91, 92, 105, 106, 120, 121, 128, 129), venant en prise avec les avancées (58 à 61, 87, 88, 101), sont munies d'un ergot (71, 72, 99, 100, 122, 123) dépassant vers le haut.

23. Dispositif selon l'une ou plusieurs des revendications 6 à 22, **caractérisé en ce que,** dans le cas de l'équipement des parties latérales (32, 33) avec deux avancées, les barres profilées horizontales (30, 31) s'étendent jusqu'au côté extérieur vertical des parties latérales (32, 33) et sont formées comme des barres profilées (30, 31) en forme de U avec des ouvertures profilées détournées les unes des autres, et **en ce que** les côtés supérieurs (96, 96) des barres profilées (30, 31) forment les avancées.

24. Dispositif selon l'une ou plusieurs des revendications 1 à 23, **caractérisé en ce que** le dispositif de levage (6) présente un longeron mobile (10, 113, 114) déplaçable en hauteur s'étendant essentiellement au-dessus de la partie longitudinale des pièces (5), et **en ce que** sur les côtés du longeron mobile sont fixés les bras de puissance (26, 27, 73, 74, 82, 89, 90, 102, 118, 119, 126, 127i) correspondants aux parties latérales (34 à 37, 46, 47) de la travée (3, 4) et s'étendant vers le bas depuis le longeron mobile au niveau vertical des avancées correspondantes.

25. Dispositif selon l'une, ou plusieurs des revendications 1 à 24, **caractérisé en ce que** les bras de puissance, dans le cas d'un bras de puissance (82, 102, 126, 127) prévu pour chaque partie latérale (34 à 37, 46, 47), présentent sur leurs extrémités inférieures chacun deux dispositifs d'accrochage de charge (83, 84, 105, 106, 128, 129) réglables en sens horizontal entre une position sortie et une position rentrée.

26. Dispositif selon l'une ou plusieurs des revendications 1 à 24, **caractérisé en ce que** deux bras de puissance (26, 27, 73, 74, 89, 90), situés dans un niveau commun parallèle aux parties latérales, sont prévus pour chaque partie latérale (32, 33), **en ce que** les bras de puissance (26, 27, 73, 74, 89, 90) sur le longeron mobile (10, 113, 114) sont placés de manière pivotante autour d'un axe (62, 63, 93, 94) horizontal s'étendant perpendiculairement au sens longitudinal des pièces (5) et sont raccordés à des moyens (64 à 66, 109, 112) pour le pivotement, **et en ce que** les bras de puissance présentent, sur leurs extrémités inférieures, un dispositif d'accrochage de charge (69, 70, 75 à 78, 91, 92) horizontal dépassant dans la direction de l'avancée (58 à 61, 87, 88) correspondante.

27. Dispositif selon l'une ou plusieurs des revendications 1 à 24, **caractérisé en ce que** deux bras de puissance (118, 119), placés l'un à côté de l'autre dans le sens longitudinal des pièces (5), sont prévus pour chaque partie latérale (32, 33), **en ce que** les bras de puissance (118, 119) sur le longeron mobile (10, 113, 114) sont placés de manière pivotante autour d'un axe (124, 125) horizontal s'étendant parallèlement au sens longitudinal des pièces (5) et sont raccordés à des moyens pour le pivotement, et **en ce que** les bras de puissance (118, 119) présentent, sur leurs extrémités inférieures, un dispositif d'accrochage de charge (120, 121) horizontal dépassant dans la direction de l'avancée (58 à 61, 87, 88) correspondante.

28. Dispositif selon l'une ou plusieurs des revendications 1 à 27, **caractérisé en ce que** les bras de puissance (26, 27, 73, 74, 82, 89, 90, 102, 118, 119, 126, 127) présentent au-dessus des dispositifs d'accrochage de charge (69, 70, 83, 84, 91, 92, 105, 106, 120, 121, 128, 129) une longueur libre surmontant la hauteur d'au moins deux travées (3, 4) posées l'une sur l'autre.

29. Dispositif selon l'une ou plusieurs des revendications 1 à 28, **caractérisé en ce que** les bras de puissance (73, 74) présentent plusieurs dispositifs d'accrochage de charge (75 à 78) l'un au-dessus de l'autre pour les avancées (58 à 61) des travées (3, 4) posées l'une sur l'autre.

30. Dispositif selon la revendication 29, **caractérisé en ce que** l'écart mutuel des dispositifs d'accrochage de charge (75, 77 et 76, 78) placés l'un sur l'autre d'un bras de puissance (73 et 74) est au moins légèrement supérieur à l'écart mutuel des avancées (58 à 61) des travées posées l'une sur l'autre.

31. Dispositif selon l'une ou plusieurs des revendications 1 à 30, **caractérisé en ce que** le dispositif de levage (6) est exécuté en construction en portique avec des supports verticaux (7, 8) pouvant être déplacés en-dehors des extrémités des pièces (5) et perpendiculairement à leur prolongement longitudinal, et avec au moins un longeron (9) raccordant entre elles les extrémités supérieures des supports verticaux et s'étendant parallèlement aux pièces (5), et **en ce que** le longeron mobile (10, 113, 114) est déplaçable verticalement avec ses extrémités sur les supports verticaux (7, 8).

32. Dispositif selon la revendication 31, **caractérisé en ce que** les supports verticaux (7, 8) du dispositif de levage (6) sont déplaçables au sol perpendiculairement par rapport au prolongement longitudinal des pièces (5).

33. Dispositif selon l'une ou plusieurs des revendications 1 à 32, **caractérisé en ce que** l'écart donné perpendiculairement au sens longitudinal des pièces (5) des bras de puissance (26, 27, 73, 74, 82, 89, 90, 102, 118, 119, 126, 127) correspondant à une travée (3, 4) est formé de façon réglable au regard des différentes largeurs de travées.

34. Dispositif selon la revendication 33, **caractérisé en ce que** le longeron mobile est constitué de deux parties de longeron mobile (113, 114) horizontales placées l'une à côté de l'autre, parallèles aux pièces (5), **en ce que** chaque partie de longeron mobile porte les bras de puissance (26, 27, 73, 74, 82, 89, 90, 102, 118, 119, 126, 127) correspondant à un côté de la travée (3, 4) et **en ce que** l'écart horizontal mutuel des parties de longeron mobile (113, 114) est réglable.
